(19) Europäisches Patentamt
European Patent Office
Office européen des brevets

(11) **EP 4 685 542 A1**

(12) **EUROPEAN PATENT APPLICATION**

(43) Date of publication:
**28.01.2026 Bulletin 2026/05**

(21) Application number: 25189798.9

(22) Date of filing: **16.07.2025**

(51) International Patent Classification (IPC):
**G02B 21/00** (2006.01)   **G02B 21/08** (2006.01)
**G02B 21/12** (2006.01)   **G02B 21/36** (2006.01)

(52) Cooperative Patent Classification (CPC):
**G02B 21/008; G02B 21/0076; G02B 21/12;
G02B 21/367;** G02B 21/088

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.07.2024 JP 2024121237**

(71) Applicant: **Evident Corporation
Kamiina-gun, Nagano 399-0495 (JP)**

(72) Inventors:
• **SUZUKI, Yoshimasa
Kamiina-gun, Nagano, 399-0495 (JP)**
• **FUJII, Shintaro
Kamiina-gun, Nagano, 399-0495 (JP)**

(74) Representative: **Schicker, Silvia
Wuesthoff & Wuesthoff
Patentanwälte und Rechtsanwalt PartG mbB
Schweigerstraße 2
81541 München (DE)**

(54) **SAMPLE IMAGE ACQUISITION DEVICE AND SAMPLE IMAGE GENERATION DEVICE**

(57)     A sample image acquisition device includes a first optical system configured to form a first optical image of a sample, a second optical system configured to form a second optical image of the sample, a moving mechanism, and an image generation unit. A fluorescent image group is generated based on the first optical image, and a bright field image group is generated based on the second optical image. The image generation unit includes a processor.

The processor calculates an estimation image of an estimation sample using a refractive index distribution of the estimation sample, calculates, as a final refractive index distribution, the refractive index distribution optimized using a bright field image and the estimation image, calculates a point spread function using the final refractive index distribution, and generates an image corresponding to a fluorescent image, using the point spread function and the fluorescent image of an area.

FIG. 1

**Description**

BACKGROUND

Technical Field

The present disclosure relates to a sample image acquisition device and a sample image generation device.

Description of the Related Art

For example, in microscopes and endoscopes, an optical image of a sample is formed by an optical system. An image of the optical image is acquired by capturing the optical image with an imager.

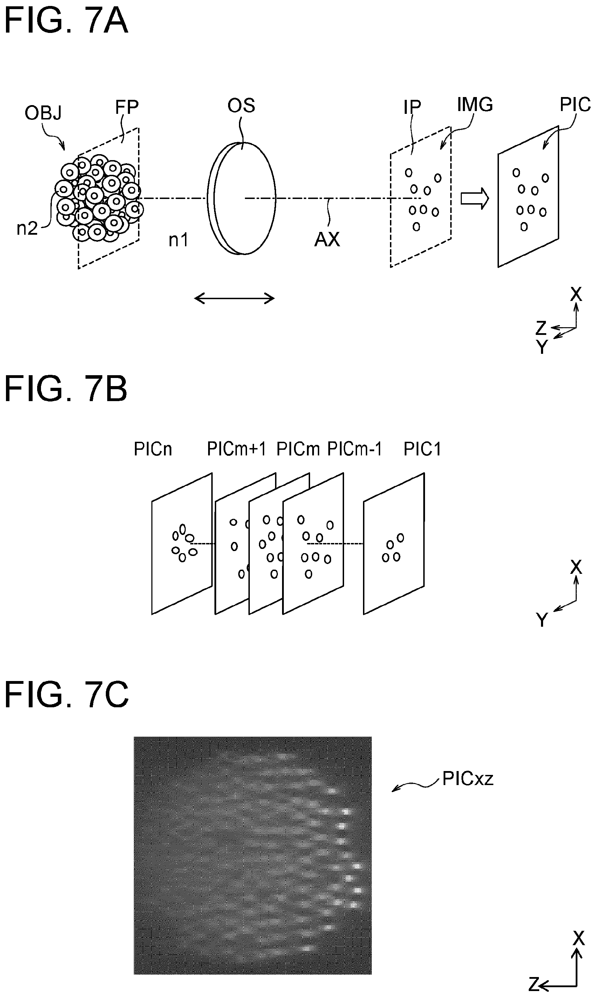

Fig. 7A, Fig. 7B, and Fig. 7C are diagrams illustrating a state of imaging, an optical image, and an image of the optical image. Fig. 7A is a diagram illustrating a state of imaging when a sample is a three-dimensional object. Fig. 7B is a diagram illustrating an image of an optical image in an XY cross-section of the sample. Fig. 7C is a diagram illustrating an image in an XZ cross-section of the optical image.

The optical axis of the optical system is denoted as the Z axis, the axis orthogonal to the Z axis is denoted as the X axis, and the axis orthogonal to both of the Z axis and the X axis is denoted as the Y axis. The XY cross-section is a plane including the X axis and the Y axis. The XZ cross-section is a plane including the X axis and the Z axis.

The sample is a mass of cells. The mass of cells is formed of a plurality of cells. Each cell has a cell nucleus.

As illustrated in Fig. 7A, since a sample OBJ is a mass of cells, the sample OBJ has a thickness not only in a direction orthogonal to the optical axis AX but also in a direction parallel to the optical axis AX. An optical image IMG is formed on an image plane IP by an optical system OS.

In the sample OBJ, only the cell nuclei are stained with a fluorescent dye. Therefore, when the sample OBJ is irradiated with excitation light, fluorescence is emitted only from the cell nuclei. As a result, a fluorescent image of the cell nuclei is formed as the optical image IMG.

By capturing the optical image IMG, it is possible to acquire an image PIC of the optical image. In the image PIC of the optical image, only the cell nuclei are imaged.

The image plane IP is conjugate to a focal plane FP. The optical image IMG represents an optical image in the XY cross-section of the sample OBJ positioned at the focal plane FP. It is possible to acquire images of a plurality of optical images by capturing the optical images while moving the sample OBJ and the focal plane FP relative to each other along the optical axis AX as indicated by the arrow.

When the sample OBJ is fixed and the optical system OS is moved toward the sample OBJ, the focal plane FP moves in the order of the top surface of the sample OBJ, the interior of the sample OBJ, and the bottom surface of the sample OBJ.

Fig. 7B illustrates images of five optical images. Each of an image PIC1, an image PICm-1, an image PICm, an image PICm+1, and an image PICn is an image of an optical image in the XY cross-section of the sample OBJ. For example, the image PIC1 is an image of the top surface of the sample OBJ, the image PICm-1, the image PICm, and the image PICm+1 are images of the interior of the sample OBJ, and the image PICn is an image of the bottom surface of the sample OBJ.

The position of the XY cross-section in the sample OBJ differs among the images of the optical images. The images of the optical images are therefore different from each other.

A series of data parallel to the X axis is extracted from the images from the image PIC1 to the image PICn. By arranging the series of data along the Z axis, it is possible to obtain an image in the XZ cross-section of an optical image.

Fig. 7C is a diagram illustrating an image in the XZ cross-section of the optical image. An image PICxz is an image of the cell nuclei. The right-left direction of the image is a direction along the optical axis AX. The right side of the image represents the image of the top surface of the sample OBJ, and the left side of the image represents the image of the bottom surface of the sample OBJ.

When the shape of the cell nucleus is a spherical shape, the shape in the XZ cross-section is a circle. As illustrated in Fig. 7C, in the image PICxz, deformation, reduction in sharpness, and reduction in brightness occur in all of the images of the cell nuclei. If deformation, reduction in sharpness, and reduction in brightness are considered as degradation of image quality, degradation of image quality occurs in the image PICxz.

An image of an optical image is obtained by capturing an optical image. That degradation of image quality occurs in an image of an optical image means that degradation occurs in the optical image.

When the sample is a point light source, it is preferable that an optical image is a point image. In order to form a point image, it is necessary that the optical system is an optical system free from aberration (hereinafter referred to as "ideal optical system") and that all of the light emitted from the point light source is incident on the optical system.

However, since the size of the optical system is finite, it is impossible to allow all of the light emitted from the point light source to be incident on the optical system. In this case, the optical image is affected by diffraction. As a result, even when the optical system is an ideal optical system, the point image is not formed, but an image having a spread is formed. The image having a spread is called a point spread function.

The optical image is represented by the following Expression (A) using the point spread function.

$$I = O*PSF \qquad (A)$$

where

I is the optical image,
O is the sample,
PSF is the point spread function, and
* is convolution.

When the point spread function is considered as an optical filter, Expression (A) represents that the optical image is obtained through a filter that is the point spread function. That degradation occurs in the optical image means that the filter, that is, the point spread function, has characteristics that cause deformation, reduction in sharpness, and reduction in brightness (hereinafter referred to as "degradation characteristics").

In a frequency space, Expression (A) is represented by the following Expression (B).

$$FI = FO \times OTF \qquad (B)$$

where

FI is the Fourier transform of the optical image,
FO is the Fourier transform of the sample, and
OTF is the optical transfer function.

OTF is the Fourier transform of the point spread function. When the point spread function has degradation characteristics, OTF also has degradation characteristics.

Expression (B) is rewritten and then Expression (B) is represented by the following Expression (C).

$$FO = FI/OTF \qquad (C)$$

If it is possible to obtain FI and OTF, it is possible to obtain FO. Then, it is possible to obtain O by the inverse Fourier transform of FO. O is the sample. This computation is called deconvolution.

The image PICxz illustrated in Fig. 7C is an image of an optical image of cell nuclei. In the image PICxz, only the cell nuclei are imaged. Only the images of the cell nuclei are therefore obtained by performing deconvolution using the image PICxz and OTF.

The sample OBJ is a mass of cells and thus includes a plurality of pieces of cytoplasm and a plurality of cell nuclei. However, in the image PICxz, only the images of the cell nuclei are obtained even by performing deconvolution. Since an image of the cytoplasm is not obtained, it is difficult to say that the sample OBJ has been obtained. Although the sample can be obtained by performing deconvolution, whether the sample is obtained depends on the image of the optical image.

In terms of an image, Expression (A) represents that the image of the optical image is an image obtained through the filter that is the point spread function. If the point spread function has degradation characteristics, I can be considered as an image of an optical image with degraded image quality, and O can be considered as an image of an optical image before image quality is degraded.

In this case, Expression (C) represents that an image of an optical image before image quality is degraded is generated from an image of an optical image with degraded image quality. Hereinafter, an image of an optical image with degraded image quality is referred to as a "degraded image". Furthermore, it is possible to say that an image of an optical image before image quality is degraded means that an image has been restored in the image with degraded image quality. Thus, an image of an optical image before image quality is degraded is referred to as a "restored image".

In order to generate a restored image, it is necessary to obtain a point spread function. This will be explained with reference to Fig. 7A. In Fig. 7A, the refractive index outside the sample OBJ is denoted as n1 and the refractive index inside the sample OBJ is denoted as n2.

It is assumed that an ideal shape is the shape of the point spread function of the ideal optical system. In the ideal shape, the refractive index between the focal plane and the ideal optical system agrees with a predetermined refractive index.

The sample OBJ is moved toward the optical system OS from a state in which the sample OBJ is at a distance from the focal plane FP. Since the optical system OS does not move, the top surface of the sample OBJ reaches the focal plane FP. In this state (hereinafter referred to as "first state"), only a space with a refractive index of n1 exists between the focal plane FP and the optical system OS. When a point light source is disposed on the focal plane FP, the point spread function in the first state is obtained.

In the first state, the refractive index between the focal plane FP and the optical system OS is n1. If the predetermined refractive index is n1, the point spread function in the first state is obtained only based on the predetermined refractive index. Thus, the shape of the point spread function in the first state is the same as the ideal shape.

When the sample OBJ is moved further, the focal plane FP reaches the interior of the sample OBJ. In this state (hereinafter referred to as "second state"), a space with a refractive index of n1 and a space with a refractive index of n2 are positioned between the focal plane FP and the optical system OS. When a point light source is disposed on the focal plane FP, the point spread function in the second state is obtained.

In the second state, the refractive index between the focal plane FP and the optical system OS is determined by n1 and n2. Since the predetermined refractive index is n1, n2 is not a predetermined refractive index. In this case, the point spread function in the second state is obtained on the basis of the predetermined refractive index and the refractive index that is not predetermined. Thus, the shape of the point spread function in the second state is different from the ideal shape.

In this way, the shape of the point spread function varies with the size of the space with a refractive index of n2. Thus, in calculation of the point spread function, the refractive index distribution in the sample OBJ has to be considered appropriately.

A technique for restoring images is disclosed in Non-Patent Literature 1. In this restoration technique, an image of an optical image acquired from a thick sample and a point spread function are used. In calculation of the point spread function, the sample is divided into a plurality of blocks, and the refractive indexes of a row of blocks parallel to the optical axis are used.

Citation List

Non-Patent Literature

Non-Patent Literature 1 Sreya Ghosh, Chrysanthe Preza, "Three-dimensional block-based restoration integrated with wide-field fluorescence microscopy for the investigation of thick specimens with spatially variant refractive index", J. of Biomedical Optics, 21(4), 046010 (2016).

SUMMARY

In the restoration technique described above, a sample with a simple structure and known refractive index values is used. Thus, it is possible to say that a refractive index distribution is known. However, even when the structure of the sample is simple, the refractive index values of the sample may be unknown. In this case, the refractive index distribution is unknown. Furthermore, even when the refractive index values of the sample are known, the structure of the sample may be complex. Also in this case, it is possible to say that the refractive index distribution is unknown.

For example, in a mass of cells, the cells are randomly overlapped. In this case, the structure of the sample is complex. Therefore, even when the refractive index value of the cytoplasm and the refractive index value of the cell nucleus are known, it is possible to say that the refractive index distribution is unknown.

Thus, it is desirable that the refractive index distribution can be calculated with high accuracy, regardless of whether the structure of the sample is complex and whether the refractive index values are known. Furthermore, it is desirable that an image can be restored with high accuracy.

The present disclosure is made in view of such a problem and is aimed to provide a sample image acquisition device capable of calculating a refractive index distribution with high accuracy and a sample image generation device capable of restoring an image with high accuracy.

In order to solve the above problem and achieve the objective, a sample image acquisition device according to at least some embodiments of the present disclosure includes:

a first optical system configured to form a first optical image of a sample;
a second optical system configured to form a second optical image of the sample;
a moving mechanism; and
an image generation unit, in which
the first optical system includes an observation optical system positioned in an optical path between the sample and
the first optical image,

an optical axis of the first optical system and an optical axis of the second optical system coincide at a position of the sample,

the moving mechanism changes a distance between the sample and a first objective lens of the first optical system and a distance between the sample and a second objective lens of the second optical system,

a fluorescent image group including a plurality of fluorescent images and a bright field image group including a plurality of bright field images are generated by changing the distances,

the fluorescent image group is generated based on the first optical image,

the bright field image group is generated based on the second optical image,

an estimation sample is a modeled sample of the sample,

a virtual observation optical system is a modeled optical system of the observation optical system,

the image generation unit includes

a memory configured to store the fluorescent image group and the bright field image group, and
a processor, and

the processor

calculates an estimation image of the estimation sample using a refractive index distribution of the estimation sample,

calculates, as a final refractive index distribution, the refractive index distribution optimized using each of the bright field images and the estimation image,

divides each of the fluorescent images into a plurality of areas,

sets a virtual area corresponding to each of the areas in the estimation sample,

sets a virtual light beam that travels from the virtual area toward the virtual observation optical system,

calculates a point spread function corresponding to the area, using the final refractive index distribution included in a range in which the virtual light beam travels,

generates, for each of the areas, an image corresponding to the area using the point spread function and the fluorescent image of the area,

combines all of the images to generate an image corresponding to the fluorescent image as a final image,

executes calculation of the final refractive index distribution for each image in the bright field image group, and executes generation of the final image for each image in the fluorescent image group.

Furthermore, a sample image generation device according to at least some embodiments of the present disclosure includes:

a memory configured to store a fluorescent image of a sample and a bright field image of the sample; and
a processor, in which

the fluorescent image is generated based on a first optical image formed by a first optical system,

the bright field image is generated based on a second optical image formed by a second optical system,

an optical axis of the first optical system and an optical axis of the second optical system coincide at a position of a sample, including a single optical axis,

a plurality of the fluorescent images and a plurality of the bright field images are images at different positions in a direction parallel to the single optical axis,

an estimation sample is a modeled sample of the sample,

the first optical system includes a first observation optical system positioned in an optical path between the sample and the first optical image,

a virtual observation optical system is a modeled optical system of the first observation optical system, and

the processor

calculates an estimation image of the estimation sample, using a refractive index distribution of the estimation sample,

calculates, as a final refractive index distribution, the refractive index distribution optimized using the bright field image and the estimation image,

divides the fluorescent image into a plurality of areas,

sets a virtual area corresponding to each of the areas in the estimation sample,

sets a virtual light beam that travels from the virtual area toward the virtual observation optical system,

calculates a point spread function corresponding to the area, using the final refractive index distribution included in a range in which the virtual light beam travels,

generates, for each of the areas, an image corresponding to the area using the point spread function and the fluorescent image of the area, and
combines all of the images to generate an image corresponding to the fluorescent image.

Effects of the Invention

The present disclosure can provide a sample image acquisition device capable of acquiring a refractive index distribution with high accuracy and a sample image generation device capable of restoring an image with high accuracy.

BRIEF DESCRIPTION OF THE DRAWINGS

Fig. 1 is a diagram illustrating a sample image acquisition device of a present embodiment;
Figs. 2A and 2B are diagrams illustrating an optical system of the sample image acquisition device;
Fig. 3 is a diagram illustrating the sample image acquisition device of the present embodiment;
Figs. 4A, 4B, and 4C are diagrams illustrating a light source and an aperture member;
Fig. 5 is a diagram illustrating another sample image acquisition device of the present embodiment;
Figs. 6A and 6B are diagrams illustrating a degraded image and a restored image; and
Figs. 7A, 7B, and 7C are diagrams illustrating a state of imaging, an optical image, and an image of the optical image.

DETAILED DESCRIPTION

Prior to a description of examples, the operation effects of embodiments according to some aspects of the present disclosure will be described. In specific description of the operation effects of the present embodiment, the description will be given with specific examples. However, these aspects described by way of example are only some of the aspects included in the present disclosure and there are numerous variations of the aspects, as in the examples described below. Therefore, the present disclosure is not limited to the aspects described by way of example.

In a sample image acquisition device of the present embodiment and a sample image generation device of the present embodiment, an image of an optical image of a sample is used. It is possible to acquire an image of an optical image of a sample by forming an optical image of the sample by an optical system and capturing the optical image of the sample by an imager.

Since the sample is a three-dimensional object, it is possible to represent the image of the optical image of the sample by an XY image, an XZ image, and a YZ image. Furthermore, since the image of the optical image of the sample is acquired through the optical system, the image of the optical image of the sample is a degraded image.

The optical axis at a position of the sample is denoted as the Z axis, the axis orthogonal to the Z axis is denoted as the X axis, and the axis orthogonal to both of the Z axis and the X axis is denoted as the Y axis. The XY cross-section is a plane including the X axis and the Y axis. The XY image is an image in the XY cross-section. The XZ cross-section is a plane including the X axis and the Z axis. The XZ image is an image in the XZ cross-section. The YZ cross-section is a plane including the Y axis and the Z axis. The YZ image is an image in the YZ cross-section.

The sample image acquisition device of the present embodiment includes a first optical system configured to form a first optical image of a sample, a second optical system configured to form a second optical image of the sample, a moving mechanism, and an image generation unit.

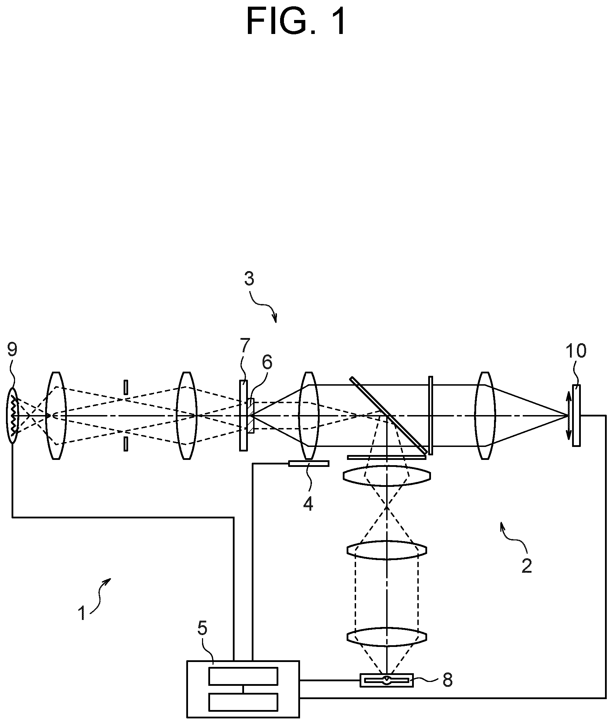

Fig. 1 is a diagram illustrating the sample image acquisition device of the present embodiment. Although Fig. 1 illustrates a configuration of an optical system, the embodiment is not limited to this configuration. Furthermore, illumination light is represented by dashed lines and imaging light is represented by solid lines.

A sample image acquisition device 1 includes a first optical system 2, a second optical system 3, a moving mechanism 4, and an image generation unit 5. A sample 6 is held on a stage 7. A first light source 8 and a second light source 9 are disposed to illuminate the sample 6. An optical image of the sample 6 is captured by an imager 10. A charge coupled device (CCD) or a complementary metal oxide semiconductor (CMOS) is used as the imager 10.

In Fig. 1, the first optical system 2 and the second optical system 3 are depicted together. Therefore, an optical element that is not used in the first optical system 2 and an optical element that is not used in the second optical system 3 are depicted. Each of the first optical system 2 and the second optical system 3 will be described.

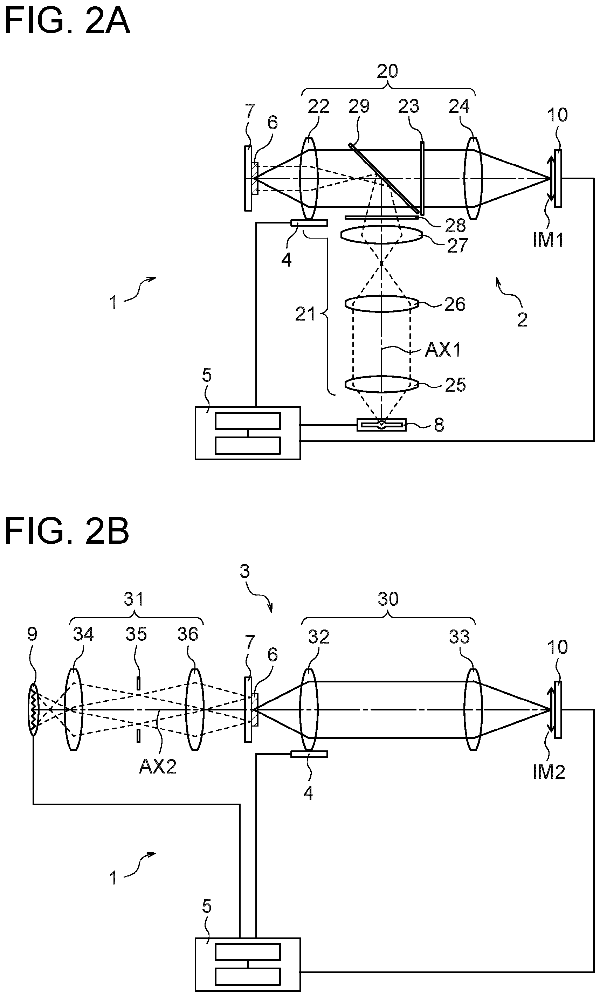

Figs. 2A and 2B are diagrams illustrating an optical system of the sample image acquisition device. Fig. 2A is a diagram illustrating the first optical system and Fig. 2B is a diagram illustrating the second optical system. The same component as that in Fig. 1 is denoted by the same numeral.

The first optical system will be described. As illustrated in Fig. 2A, the first optical system 2 includes a first observation optical system 20 and a first illumination optical system 21. The first observation optical system 20 is positioned in an optical path between the sample 6 and a first optical image IM1. The first illumination optical system 21 is positioned in an optical path between the first light source 8 and the sample 6.

The first observation optical system 20 includes a first objective lens 22, an absorption filter 23, and an imaging lens 24. The first illumination optical system 21 includes a collector lens 25, a relay lens 26, a relay lens 27, an excitation light filter 28, a dichroic mirror 29, and a first objective lens 22.

In the first optical system 2, the sample 6 is illuminated through the first illumination optical system 21. The first light source 8 is disposed in the optical path of the first optical system 2. An image of the first light source 8 is formed at a pupil position of the first objective lens 22 by the collector lens 25, the relay lens 26, and the relay lens 27.

Illumination light emitted from the first light source 8 is incident on the excitation light filter 28. The excitation light filter 28 has optical characteristics of transmitting excitation light. Thus, excitation light is emitted from the excitation light filter 28. The excitation light reaches the dichroic mirror 29.

The dichroic mirror 29 has optical characteristics of reflecting excitation light and transmitting fluorescence. Thus, the excitation light is reflected by the dichroic mirror 29 and incident on the first objective lens 22. As a result, the sample 6 is illuminated with the excitation light through the first objective lens 22.

The sample 6 is stained with a fluorescent dye. The excitation light is light in a wavelength range that excites the fluorescent dye. When the sample 6 is illuminated with the excitation light, fluorescence is produced in the sample 6. The fluorescence is incident on the first objective lens 22 and thereafter transmitted through the dichroic mirror 29 and incident on the absorption filter 23.

The absorption filter 23 has optical characteristics of transmitting fluorescence. The fluorescence is transmitted through the absorption filter 23 and thereafter focused by the imaging lens 24. As a result, the first optical image IM1 is formed on an image plane of the first observation optical system 20.

The image pickup surface of the imager 10 is positioned at the image plane of the first observation optical system 20. The first optical image IM1 is captured by the imager 10. As a result, it is possible to acquire an image of the first optical image IM1. The first optical image IM1 is an optical image formed by fluorescence. Thus, an image of the first optical image IM1 is a fluorescent image.

The second optical system will be described. As illustrated in Fig. 2B, the second optical system 3 includes a second observation optical system 30 and a second illumination optical system 31. The second observation optical system 30 is positioned in an optical path between the sample 6 and a second optical image IM2. The second illumination optical system 31 is positioned in an optical path between the second light source 9 and the sample 6.

The second observation optical system 30 includes a second objective lens 32 and an imaging lens 33. The second illumination optical system 31 includes a collector lens 34, an aperture stop 35, and a condenser lens 36.

In the second optical system 3, the sample 6 is illuminated through the second illumination optical system 31. The second light source 9 is disposed in the optical path of the second optical system 3. An image of the second light source 9 is formed at a pupil position of the condenser lens 36 by the collector lens 34. The aperture stop 35 is disposed at the pupil position of the condenser lens 36.

Illumination light emitted from the second light source 9 reaches the sample 6 as it is. Thus, bright field illumination is performed on the sample 6. Since the illumination light is white light, the sample 6 is illuminated with white light.

The white light transmitted through the sample 6 is incident on the second objective lens 32 and thereafter focused by the imaging lens 33. As a result, the second optical image IM2 is formed on an image plane of the second observation optical system 30.

The image pickup surface of the imager 10 is positioned at the image plane of the second observation optical system 30. The second optical image IM2 is captured by the imager 10. As a result, it is possible to acquire an image of the second optical image IM2. The second optical image IM2 is an optical image formed by white light. Thus, the image of the second optical image IM2 is a bright field image.

The absorption filter 23, the excitation light filter 28, and the dichroic mirror 29 form a fluorescent mirror unit. The fluorescent mirror unit can move from outside the optical path to inside the optical path and move vice versa. When the first optical image IM1 is formed, the mirror unit is positioned inside the optical path. When the second optical image IM2 is formed, the mirror unit is positioned outside the optical path.

An optical axis AX1 of the first optical system 2 and an optical axis AX2 of the second optical system 3 coincide at the position of the sample 6. Specifically, the optical axis of the first observation optical system 20 and the optical axis of the second observation optical system 30 coincide at the position of the sample 6. Since the optical axis at the position of the sample 6 is the Z axis, the sample 6, the first observation optical system 20, and the second observation optical system 30 are positioned on the Z axis.

In the first optical system 2, the moving mechanism 4 is provided at the first objective lens 22. In this case, the first objective lens 22 moves in the Z axis direction. In the second optical system 3, the moving mechanism 4 is provided at the second objective lens 32. In this case, the second objective lens 32 moves in the Z axis direction. The moving mechanism 4 may be provided on the stage 7. In this case, the sample 6 moves in the Z axis direction as the stage 7 moves.

The moving mechanism 4 changes the distance between the sample 6 and the first objective lens 22 and the distance between the sample 6 and the second objective lens 32. In the first optical system 2, the focal position of the first observation optical system 20 and the position of the sample 6 change relative to each other in the Z axis direction. In the second optical system 3, the focal position of the second observation optical system 30 and the position of the sample 6 change relative to each other in the Z axis direction.

When the distance between the sample 6 and the first objective lens 22 changes, the focal position of the first observation optical system 20 with respect to the sample 6 changes in the Z axis direction. The sample 6 is a three-dimensional object. Thus, when the first optical image IM1 is captured while changing the distance, a plurality of images of the sample 6 with different positions in the Z axis direction are generated. Since an image generated based on the first optical image IM1 is a fluorescent image, a fluorescent image group including a plurality of fluorescent images is generated.

When the distance between the sample 6 and the second objective lens 32 changes, the focal position of the second observation optical system 30 with respect to the sample 6 changes in the Z axis direction. As described above, the sample 6 is a three-dimensional object. Thus, when the second optical image IM2 is captured while changing the distance, a plurality of images of the sample 6 with different positions in the Z axis direction are generated. Since an image generated based on the second optical image IM2 is a bright field image, a bright field image group including a plurality of bright field images is generated.

Each image in the fluorescent image group and each image in the bright field image group are XY images. Each of the XY images has a different position in the Z axis direction. Thus, it is possible to generate an XY image, an XZ image, and a YZ image, based on each image.

The moving mechanism 4, the first light source 8, the second light source 9, and the imager 10 are connected to the image generation unit 5. The image generation unit 5 controls the moving mechanism 4, the first light source 8, and the second light source 9. Furthermore, an image generated by the imager 10 is input to the image generation unit 5.

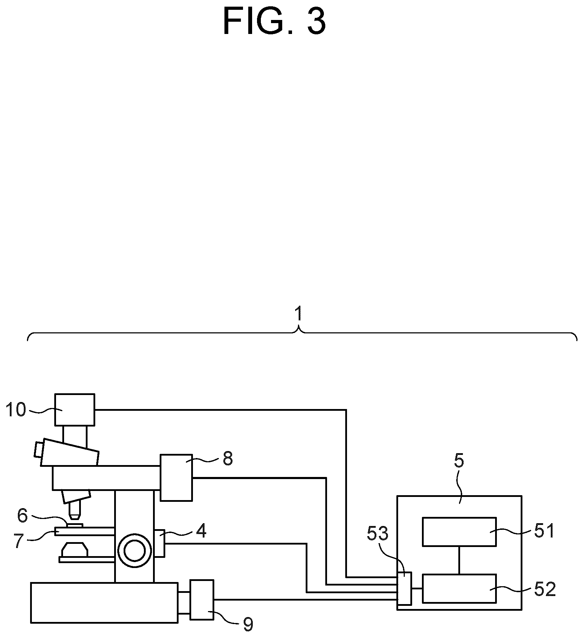

Fig. 3 is a diagram illustrating the sample image acquisition device of the present embodiment. The same component as that in Fig. 1 is denoted by the same numeral and a description thereof is omitted.

The image generation unit 5 includes a memory 51, a processor 52, and an input/output unit 53. The memory 51 stores the fluorescent image group and the bright field image group. The processor 52 executes various processes. Output of various control signals and input of images are performed via the input/output unit 53. Output of images may be performed via the input/output unit 53.

In the various processes, a bright field image, a fluorescent image, an estimation sample, and an estimation image are used. The bright field image is formed of a plurality of pixels. A value of transmitted light intensity is set in each pixel. The fluorescent image is also formed of a plurality of pixels. A value of fluorescence intensity is set in each pixel.

The estimation sample is used in calculation of an estimation image and calculation of a point spread function. For this, a refractive index distribution is set in the estimation sample. The refractive index distribution is represented by a plurality of refractive index values. By treating the estimation sample as an image, it is possible to set a refractive index value in each pixel.

The estimation image is used for comparison with the bright field image. Thus, the estimation image is also an image formed of a plurality of pixels. A value of transmitted light intensity obtained by calculation is set in each pixel.

In the processor 52, various processes are executed. The various processes include a process of calculating a refractive index distribution and a process of restoring an image.

In the restoration of an image, a restored image is generated from a degraded image. The degraded image is an image of an optical image with degraded image quality, and the restored image is an image of an optical image before image quality is degraded.

It is possible to generate the restored image from the degraded image and the point spread function. The accuracy of the restored image depends on the accuracy of the point spread function. Thus, it is preferable that the point spread function is calculated with high accuracy.

In calculation of the point spread function, a refractive index distribution of a sample is used. Thus, the refractive index distribution of a sample requires high accuracy. By using a refractive index distribution with high accuracy, it is possible to enhance the accuracy of the point spread function.

The sample 6 used in the sample image acquisition device 1 is determined by an observer. Thus, what the sample 6 is like is known. However, the refractive index distribution of the sample 6 is often yet unknown.

The process of calculating a refractive index distribution (hereinafter referred to as "calculation process") will be described below. In the calculation process, a final refractive index distribution is calculated. In order to execute the calculation process, an estimation sample is set. The estimation sample is a modeled sample of the sample 6. It is possible to set a refractive index distribution as information on the refractive index in the estimation sample.

In the calculation process, one bright field image is selected from a plurality of bright field images. Furthermore, an arbitrary refractive index distribution is set in the estimation sample. The arbitrary refractive index distribution can be considered as an initial value. Subsequently, an estimation image of the estimation sample is calculated using the set arbitrary refractive index distribution. Then, an optimized refractive index distribution (hereinafter referred to as "final refractive index distribution") is calculated using the bright field image and the estimation image.

A process of comparing the bright field image with the estimation image while changing the refractive index distribution is performed until the final refractive index distribution is calculated. When a residual difference between the bright field image and the estimation image falls below a preset standard, the comparison is terminated, and the refractive index distribution at that time is used as the final refractive index distribution.

For a better understanding of a calculation method of the final refractive index distribution, for example, WO 2021/024420 can be referred to.

The final refractive index distribution is used to calculate the point spread function in restoration of an image described later. The restoration of an image is performed for each of the fluorescent images. Thus, the calculation process is performed multiple times.

In the calculation process, each time restoration of an image is performed once, selection of a bright field image, setting of an arbitrary refractive index distribution, comparison between the bright field image and the estimation image, and calculation of the final refractive index distribution are performed. Thus, the final refractive index distribution in the estimation sample is updated each time restoration of an image is performed once.

If an estimation sample group is used, it is not necessary to update the final refractive index distribution each time restoration of an image is performed once. The estimation sample group has the same number of estimation samples as the number of bright field images. Using the estimation sample group, it is possible to calculate the final refractive index distribution for all bright field images before restoration of an image is performed.

The sample image acquisition device of the present embodiment uses a bright field image in the calculation process. Since the bright field image is an image based on an optical image of the sample, the calculation of the final refractive index distribution can be considered as being performed based on the sample. Thus, even when the refractive index distribution is complex or when the refractive index values are unknown, the refractive index distribution of the sample can be considered as being reproduced with high accuracy in the final refractive index distribution. As a result, in the sample image acquisition device of the present embodiment, it is possible to calculate the refractive index distribution with high accuracy, regardless of whether the structure of the sample is complex and whether the refractive index values are known.

As described above, a bright field image is used in the calculation process. The bright field image is generated based on an optical image of the sample. Thus, it is preferable to illuminate the sample so that an optical image suitable for calculation of the final refractive index distribution is formed. Using partial coherent illumination as illumination of the sample, it is possible to form an optical image suitable for calculation of the final refractive index distribution.

In the second illumination optical system 31, the aperture stop 35 is disposed at a pupil position of the condenser lens 36. The aperture stop 35 has an opening. The size of the opening can be considered as the size of the pupil of the condenser lens 36.

An optical image of a light source is formed at the position of the aperture stop. The magnification of the collector lens 34 is set so that the size of the optical image is smaller than the size of the opening. Thus, the size of the optical image is smaller than the size of the pupil of the condenser lens 36. In this case, since the pupil of the condenser lens 36 is not filled with illumination light, partial coherent illumination is performed on the sample 6.

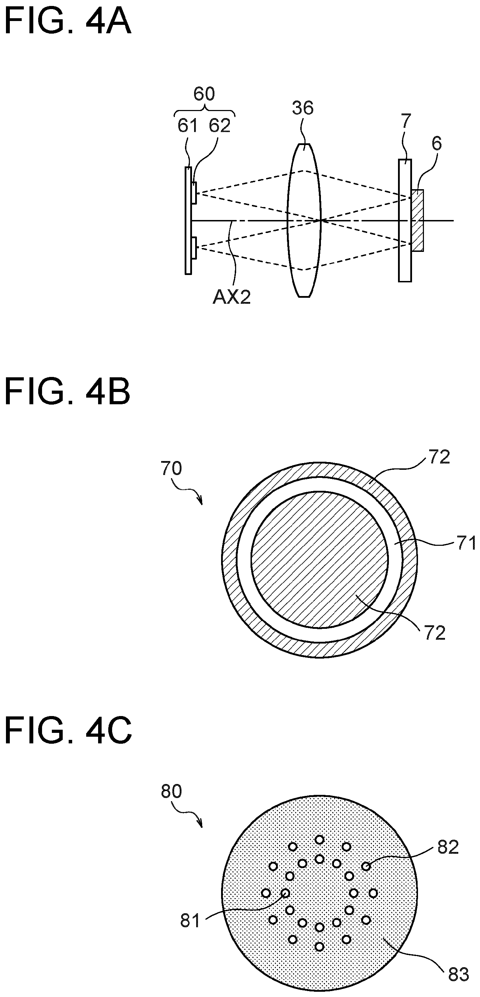

Figs. 4A, 4B, and 4C are diagrams illustrating a light source and an aperture member. Fig. 4A is a diagram illustrating a light source, and Figs. 4B and 4C are diagrams illustrating an aperture member.

As illustrated in Fig. 4A, a light source 60 includes a substrate 61 and a light-emitting part 62. The light-emitting part 62 is disposed at a position away from the optical axis AX2. The light-emitting part 62 has an annular shape but the shape is not limited to this. For example, a plurality of light-emitting parts may be disposed discretely on a circumference. A light emitting diode (LED) is used for the light-emitting part 62.

The light source 60 is disposed at the position of the aperture stop 35. In illumination using the light source 60, illumination light does not exist in a circular region including the optical axis AX2. The pupil of the condenser lens 36 is therefore not filled with illumination light. Thus, by using the light source 60, it is possible to perform partial coherent illumination.

As illustrated in Fig. 4B, an aperture member 70 includes a transmission part 71 and a light-shielding part 72. The transmission part 71 is provided at a position away from the center of the aperture member 70. The transmission part 71 has an annular shape but the shape is not limited to an annular shape. For example, a plurality of transmission parts may be disposed discretely on a circumference.

The aperture member 70 is disposed at the position of the aperture stop 35. In illumination using the aperture member 70, illumination light does not exist in a circular region including the optical axis AX2. The pupil of the illumination optical system is therefore not filled with illumination light. Thus, by using the aperture member 70, it is possible to perform partial coherent illumination.

As illustrated in Fig. 4C, an aperture member 80 includes a first transmission part 81, a second transmission part 82, and a light-shielding part 83. The first transmission part 81 and the second transmission part 82 are provided at positions away from the center of the aperture member 80.

The first transmission part 81 is formed of a plurality of transmission holes disposed on a first circumference. The second transmission part 82 is formed of a plurality of transmission holes disposed on a second circumference. The diameter of the first circumference is smaller than the diameter of the second circumference.

The aperture member 80 is disposed at the position of the aperture stop 35. In illumination using the aperture member 80, illumination light does not exist in a circular region including the optical axis AX2. The pupil of the illumination optical system is therefore not filled with illumination light. Thus, by using the aperture member 80, it is possible to perform partial coherent illumination.

The process of restoring an image (hereinafter referred to as "restoration process") will now be described. In the restoration process, a restored image is generated from a degraded image. In the sample image acquisition device of the present embodiment, an image corresponding to a fluorescent image is generated as a final image, based on the fluorescent image. Thus, the fluorescent image corresponds to the degraded image. Furthermore, the image corresponding to the fluorescent image, that is, the final image, corresponds to the restored image.

Prior to the restoration process, the following process is performed. The fluorescent image is divided into a plurality of areas. Furthermore, the estimation sample is divided into a plurality of areas. By dividing these, it is possible to associate one area of the fluorescent image with one virtual area of the estimation sample. Then, in the estimation sample, a virtual area corresponding to an area of the fluorescent image is set.

Furthermore, it is possible to set a refractive index distribution in the estimation sample. As described above, the final refractive index distribution is calculated by executing the calculation process. Then, the final refractive index distribution is set in the estimation sample.

Since the fluorescent image is formed of a plurality of pixels as described above, the area of the fluorescent image is also formed of a plurality of pixels. Furthermore, if the estimation sample is considered as an image, the estimation sample is formed of a plurality of pixels. Thus, the virtual area is also formed of a plurality of pixels.

Furthermore, a virtual observation optical system is set. The virtual observation optical system is a modeled optical system of the observation optical system used in generation of the degraded image. As described above, a fluorescent image is used as a degraded image. Thus, a modeled optical system of the first observation optical system 20 is used for the virtual observation optical system.

When the above process is finished, one virtual area is selected from among a plurality of virtual areas. Subsequently, a virtual light beam is set. In order to set the virtual light beam, a virtual point light source is set at the center of the selected virtual area. The virtual light beam is a light beam traveling from the virtual point light source toward the virtual observation optical system. When the virtual light beam is set, the virtual areas included in a range in which the virtual light beam travels are identified.

Hereafter, the virtual areas included in a range in which the virtual light beam travels are referred to as a virtual area group. The number of virtual areas included in the virtual area group differs depending on the selected virtual area and the range of the virtual light beam. The number of virtual areas included in the virtual area group is equal to or greater than zero.

For example, suppose that a virtual area positioned farthest away from the virtual observation optical system is selected. In this case, the virtual light beam reaches the virtual observation optical system through other virtual areas. The number of virtual areas included in the virtual area group is therefore equal to or more than one.

Suppose that a virtual area positioned closest to the virtual observation optical system is selected. In this case, the virtual light beam reaches the virtual observation optical system without through other virtual areas. The number of virtual areas included in the virtual area group is therefore zero.

The final refractive index distribution is set in the estimation sample. Thus, it is possible to obtain the final refractive index distribution in the virtual area group. Then, the point spread function corresponding to the selected virtual area is calculated using the final refractive index distribution in the virtual area group. The virtual areas of the estimation sample correspond one-to-one with the areas of the fluorescent image. Thus, the point spread function corresponding to the area of the fluorescent image is calculated.

The point spread function is calculated by setting a virtual point light source in the selected virtual area. The position of the virtual point light source is only at the center of the selected virtual area. Thus, one point spread function is calculated for one virtual area.

When the point spread function is calculated, an image corresponding to the area of the fluorescent image is generated using the point spread function and the area of the fluorescent image. As described above, the area of the fluorescent image is formed of a plurality of pixels. Since the number of point spread functions to be calculated is one, the same point spread function is used for each pixel of the area of the fluorescent image.

By executing the same process for each area of the fluorescent image, an image corresponding to each area of the fluorescent image is generated. Then, by combining all of the images, an image corresponding to the fluorescent image is generated as the final image.

In the process described above, one final image is generated from one fluorescent image. The fluorescent image group includes a plurality of fluorescent images. Thus, the calculation of the final refractive index distribution may be executed for each image in the bright field image group, and the generation of the final image may be performed for each image in the fluorescent image group.

For a better understanding of a generation method of the final image, for example, WO 2023/175860 can be referred to.

As described above, in the sample image acquisition device of the present embodiment, the refractive index distribution is calculated based on the optical image of the sample. Thus, it is possible to calculate the refractive index distribution with high accuracy, regardless of whether the structure of the sample is complex and whether the refractive index values are known. Then, since the refractive index distribution with high accuracy is used, it is possible to calculate the point spread function with high accuracy. Furthermore, since it is possible to use the point spread function with high accuracy, it is possible to restore an image with high accuracy.

In the area of the fluorescent image, it is preferable that the point spread function is calculated for each pixel. In this case, however, much time is spent in calculating the point spread function. As a result, it take longer time for the restoration process.

In the sample image acquisition device of the present embodiment, one point spread function is calculated for one area of the fluorescent image. The same point spread function is therefore used for each pixel in one area of the fluorescent image. As a result, it is possible to reduce the time taken for the restoration process.

The sample image generation device of the present embodiment includes: a memory configured to store a fluorescent image of a sample and a bright field image of the sample; and a processor. The fluorescent image is an image generated based on the first optical image formed by the first optical system. The bright field image is an image generated based on the second optical image formed by the second optical system.

It is possible to use the image generation unit 5 as the sample image generation device. However, the input/output unit 53 does not necessarily have the function of outputting various control signals as long as it has the function of inputting and outputting images.

In the sample image generation device, the fluorescent image and the bright field image are generated by a device separate from the sample image generation device, for example, by a microscope. The microscope includes a first optical system and a second optical system. The first optical system includes a first observation optical system. The first observation optical system is positioned in an optical path between the sample and the first optical image.

The optical axis of the first optical system and the optical axis of the second optical system coincide at the position of the sample, including a single optical axis. A plurality of fluorescent images and a plurality of bright field images stored in the memory are images at different positions in a direction parallel to the single optical axis.

In the processor, an estimation sample and a virtual observation optical system are set. The estimation sample is a modeled sample of the sample used in acquisition of an image. The virtual observation optical system is a modeled optical system of the first observation optical system. When these settings are finished, various processes are performed. The various processes are the same processes as in the sample image acquisition device and will not be further elaborated.

In the sample image acquisition device of the present embodiment, it is preferable that a common objective lens is disposed in an optical path where the optical axis of the first optical system and the optical axis of the second optical system coincide, and the first optical image and the second optical image are formed through the common objective lens.

The final refractive index distribution is calculated using a bright field image. Then, the point spread function corresponding to an area of the fluorescent image is calculated from the final refractive index distribution. If misalignment occurs between the position of the sample in the fluorescent image and the position of the sample in the bright field image, the position of the final refractive index distribution is shifted from the position of the sample in the fluorescent image. It is therefore impossible to accurately calculate the point spread function corresponding to the area of the fluorescent image. As a result, it is impossible to restore an image with high accuracy.

In the sample image acquisition device of the present embodiment, the common objective lens is disposed in the optical path where the optical axis of the first optical system and the optical axis of the second optical system coincide. Therefore, when the common objective lens is the first objective lens, the first optical image is formed, and when the common objective lens is the second objective lens, the second optical image is formed.

In this way, in the sample image acquisition device of the present embodiment, the first optical image and the second optical image are formed by the common objective lens, that is, one objective lens. Since one imager is used to capture an optical image, the first optical image and the second optical image are captured by the same imager. When the same imaging lens is used in the first observation optical system and the second observation optical system, the first optical image and the second optical image are formed at the same position on the image pickup surface. Furthermore, in this case, since the magnification of the objective lens and the magnification of the imaging lens are the same, the size of the first optical image and the size of the second optical image are the same. Thus, misalignment in the position of optical images or the size of optical images does not occur between the first optical image and the second optical image.

The fluorescent image is generated based on the first optical image, and the bright field image is generated based on the second optical image. Since the first optical image and the second optical image are formed in the same size and at the same position on the image pickup surface, misalignment does not occur between the position of the sample in the fluorescent image and the position of the sample in the bright field image. It is therefore possible to accurately calculate the point spread function corresponding to the area of the fluorescent image. As a result, it is possible to restore an image with high accuracy.

In the sample image acquisition device of the present embodiment, it is preferable that the second optical system includes an illumination optical system, and the following Conditional Expression (1) is satisfied:

$$0.1 \leq NAill/NA \leq 1 \qquad (1)$$

where

NAill is a numerical aperture of the illumination optical system, and
NA is a numerical aperture of the second objective lens.

As described above, the bright field image group includes a plurality of bright field images. Each of the bright field images has a different position in the Z axis direction.

When a value falls below the lower limit of Conditional Expression (1), the sample is illuminated in a state close to coherent illumination. As a result, the resolution in the Z axis direction in the second observation optical system deteriorates. When a value exceeds the upper limit of Conditional Expression (1), the sample is illuminated in a state close to incoherent illumination. As a result, the contrast of the second optical image is reduced.

In both cases, image quality is deteriorated in each of the bright field images. The bright field image is used in the calculation process, that is, the calculation of the final refractive index distribution. Therefore, if the image quality of the bright field images is deteriorated, it becomes difficult to calculate the refractive index distribution with high accuracy. As a result, it becomes difficult to restore an image with high accuracy.

Instead of Conditional Expression (1), the following Conditional Expression (1') may be satisfied.

$$0.2 \leq NAill/NA \leq 0.8 \qquad (1')$$

In the sample image acquisition device of the present embodiment, it is preferable that the processor aligns the fluorescent image with the bright field image before calculating the estimation image.

The first optical image is an optical image formed by fluorescence. The second optical image is an optical image formed by white light. The wavelength range of fluorescence is different from the wavelength range of white light. Thus, it is possible to use an objective lens suitable for imaging with fluorescence for the first objective lens and use an objective lens suitable for imaging with white light for the second objective lens.

In this case, the eccentricity of the optical system that forms the objective lens is preferably zero in each of the objective lenses. However, it is difficult to set the eccentricity to zero. Furthermore, it is also difficult to set the eccentricity equal. Therefore, even when the same imaging lens is used for the first observation optical system and the second observation optical system, and one imager is used to capture an optical image, the first optical image and the second optical image are formed at different positions on the image pickup surface. As a result, misalignment occurs between the position of the sample in the fluorescent image and the position of the sample in the bright field image.

Then, prior to acquisition of the fluorescent image group and the bright field image group, for example, an image of fluorescent beads is acquired using the first objective lens and the second objective lens.

In the first optical system, a fluorescent image is acquired using the first objective lens. In the second optical system, a bright field image is acquired using the second objective lens. It is possible to obtain the amount of misalignment by comparing the position of the fluorescent beads in the fluorescent image with the position of the fluorescent beads in the bright field image.

It is possible to eliminate the misalignment between the fluorescent image and the bright field image by aligning the fluorescent image with the bright field image using the amount of misalignment, before calculating the estimation image. It is therefore possible to calculate the point spread function corresponding to the area of the fluorescent image with high accuracy. As a result, it is possible to restore an image with high accuracy.

As described above, fluorescence and white light have different wavelength ranges, and light intensity also differs between fluorescence and white light. Then, an imager suitable for fluorescence (hereinafter referred to as "first imager") and an imager suitable for white light (hereinafter referred to as "second imager") may be used. In this case, a first optical image is captured by the first imager, and a second optical image is captured by the second imager.

In order to use the first imager and the second imager, an optical path splitting element may be disposed between the imaging lens and the image plane to form a first optical path toward the first imager and a second optical path toward the second imager. In the first optical path, the first optical image is formed on the image pickup surface of the first imager. In the second optical path, the second optical image is formed on the image pickup surface of the second imager.

Since the magnification of the objective lens and the magnification of the imaging lens are the same, the size of the first optical image and the size of the second optical image are the same. However, the first optical image and the second optical image are formed at different positions and captured by different imagers. Therefore, it is difficult to align the position of the first optical image on the image pickup surface of the first imager with the position of the second optical image on the image pickup surface of the second imager. As a result, misalignment occurs between the position of the sample in the fluorescent image and the position of the sample in the bright field image.

Furthermore, it is also possible that an optical path splitting element is disposed between the objective lens and the imaging lens to form a first optical path toward the first imager and a second optical path toward the second imager. Also in this case, the first optical image and the second optical image are formed at different positions and captured by different imagers. In addition, different imaging lenses are used for the first optical path and the second optical path.

Therefore, it is difficult to align the position of the first optical image on the image pickup surface of the first imager with the position of the second optical image on the image pickup surface of the second imager. As a result, misalignment occurs between the position of the sample in the fluorescent image and the position of the sample in the bright field image.

As described above, when two imagers are used, misalignment occurs between the position of the sample in the fluorescent image and the position of the sample in the bright field image. However, in the sample image acquisition device of the present embodiment, it is possible to align the fluorescent image with the bright field image before calculating the estimation image. It is therefore possible to calculate the point spread function corresponding to the area of the fluorescent image with high accuracy. As a result, it is possible to restore an image with high accuracy.

In the sample image acquisition device of the present embodiment, it is preferable that in generation of a plurality of fluorescent images, the sample and the common objective lens are changed at a first distance, in generation of a plurality of bright field images, the sample and the common objective lens are changed at a second distance, and the following Conditional Expression (2) is satisfied.

$$\Delta Z1 < \Delta Z2 \qquad (2)$$

where

$\Delta Z1$ is the first distance, and
$\Delta Z2$ is the second distance.

By satisfying Conditional Expression (2), the number of bright field images generated is smaller than the number of fluorescent images generated. Thus, it is possible to reduce the time taken for generating bright field images. Furthermore, since it is possible to suppress increase in the number of bright field images generated, it is possible to reduce the time taken for calculating the refractive index distribution.

When Conditional Expression (2) is satisfied, the number of bright field images generated is different from the number of fluorescent images generated. However, if the difference between the number of bright field images generated and the number of fluorescent images generated is small, it is possible to suppress significant reduction in the accuracy of the estimated final refractive index distribution. Thus, it is possible to restore an image with high accuracy.

When a common objective lens is not used, the sample and the first objective lens may be changed at the first distance, and the sample and the second objective lens may be changed at the second distance. Also in this case, it is preferable that Conditional Expression (2) is satisfied.

It is preferable that the sample image acquisition device of the present embodiment includes a light source configured to emit illumination light toward the second optical system, the sample in a container filled with liquid is illuminated by the illumination light, and the following Conditional Expression (3) is satisfied.

$$\Delta Z1 < \Delta Z2 < 2.5 \times n \times \lambda c/NA^2 \qquad (3)$$

where

n is a refractive index of the liquid,
$\lambda c$ is a centroid wavelength of the illumination light, and
NA is a numerical aperture of the second objective lens.

Furthermore, the centroid wavelength is represented by the following expression.

[Mathematical Formula 1]

$$\lambda_c = \frac{\int \lambda P(\lambda) d\lambda}{\int P(\lambda) d\lambda}$$

where

$P(\lambda)$ is an intensity of illumination light at a wavelength $\lambda$.

When a value falls below the lower limit of Conditional Expression (3), the number of bright field images generated is greater than the number of fluorescent images generated. Thus, the time taken for generating bright field images is longer. Furthermore, since the number of bright field images generated increases, the time taken for calculating the refractive index distribution is longer.

When a value exceeds the upper limit of Conditional Expression (3), the number of bright field images generated becomes too small. In this case, a lack of bright field images corresponding to fluorescent images increases too much. Since the final refractive index distribution is calculated from the bright field image, the same number of final refractive index distributions as the number of lacking bright field images becomes lacking.

As described above, it is possible to estimate the lacking final refractive index distributions using a plurality of bright field images. However, if the number of field images generated becomes too small, the accuracy of estimation in the lacking final refractive index distributions is deteriorated. Thus, it becomes difficult to calculate the final refractive index distribution with high accuracy. As a result, it becomes difficult to restore an image with high accuracy.

Instead of Conditional Expression (3), the following Conditional Expression (3') may be satisfied.

$$\Delta Z1 < \Delta Z2 < 1.25 \times n \times \lambda c / NA^2 \qquad (3')$$

It is preferable that the sample image acquisition device of the present embodiment includes a light source configured to emit illumination light toward the second optical system, the processor divides the bright field image into a plurality of areas, and the following Conditional Expression (4) is satisfied.

$$2 < dxsplit / D < 200 \qquad (4)$$

where

$$D = 1.22 \times \lambda c / (NA + NAill),$$

dxsplit is a length of one side of the area in the bright field image,
$\lambda c$ is a centroid wavelength of the illumination light,
NA is a numerical aperture of the second objective lens, and
NAill is a numerical aperture of the illumination optical system.

As described above, in the restoration process, the point spread function is used for each pixel in the area of the fluorescent image. It is preferable that the point spread function is calculated for each pixel. However, in the sample image acquisition device of the present embodiment, the point spread function is calculated only at the center of the virtual area.

Essentially, this point spread function should be used only for the pixel positioned at the center of the area of the fluorescent image. However, in the restoration process, this point spread function is used for each pixel in the area of the fluorescent image.

The area of the fluorescent image is formed of a plurality of pixels. A plurality of pixels can be classified into a central pixel and a peripheral pixel. The central pixel is the pixel positioned at the center of the area of the fluorescent image. The peripheral pixel is a pixel positioned around the central pixel.

It is possible to classify the peripheral pixel into a proximal pixel and a distal pixel. The proximal pixel is a pixel positioned near the central pixel. The distal pixel is a pixel positioned far from the central pixel.

The shape of the point spread function corresponding to the peripheral pixel is different from the shape of the point spread function corresponding to the central pixel. The difference in the shape of the point spread function increases from the proximal pixels toward the distal pixels.

Among the peripheral pixels, in the proximal pixels, the difference in the shape of the point spread function is small. Thus, even if the point spread function corresponding to the central pixel is used for the proximal pixels, reduction of the accuracy of restoration in the proximal pixels is slight. In contrast, in the distal pixels, the difference in the shape of the point spread function is large. Thus, if the point spread function corresponding to the central pixel is used for the distal pixels, reduction of the accuracy of restoration in the distal pixels is noticeable.

When a value falls below the lower limit of Conditional Expression (4), the size of the area in the bright field image becomes too small. As described above, the fluorescent image is divided into a plurality of areas. If the number of areas in the bright field image is the same as the number of areas in the fluorescent image, the size of the area in the fluorescent image becomes too small.

If the size of the area in the fluorescent image is small, the number of areas in the fluorescent image becomes larger. As described above, in the restoration process, the process is performed for each area of the fluorescent image. Therefore, if the number of areas in the fluorescent image becomes larger, it takes longer time for the restoration process.

Furthermore, if the size of the area in the bright field image becomes too small, the size of the area in the fluorescent image becomes too small. When the size of the area in the fluorescent image is small, the proportion of the proximal pixels in the peripheral pixels is larger. Therefore, even if the point spread function corresponding to the central pixel is used for the peripheral pixels, reduction of the accuracy of restoration in the peripheral pixels is slight.

It is possible to make a comparison in terms of improvement in accuracy of restoration if a case where the proportion of the distal pixels in the peripheral pixels is large is used as a standard. Compared with the case where the proportion of the distal pixels in the peripheral pixels is large, the accuracy of restoration in the peripheral pixels is significantly improved in a case where the proportion of the proximal pixels in the peripheral pixels is large. However, the smaller the size of the area in the fluorescent image, the smaller the difference in the shape of the point spread function. Therefore, even if the size of the area in the fluorescent image is further reduced, the accuracy of restoration in the peripheral pixels is not noticeably improved.

Furthermore, D represents the resolution in the bright field image. The bright field image is an XY image, and the XY image is an image in the XY cross-section. Thus, D represents the resolution in the XY cross-section. The refractive index distribution is calculated using the bright field image. In addition, the point spread function is calculated using the refractive index distribution. Thus, D represents the resolution in the refractive index distribution and the resolution in the point spread function.

As described above, it is possible to reduce the difference in the shape of the point spread function by reducing the size of the area in the fluorescent image. However, even if the difference in the shape of the point spread function is reduced, it is impossible to achieve an improvement in the accuracy of restoration that exceeds the resolution in the point spread function.

In this way, if the size of the area in the fluorescent image becomes too small, it only takes longer time for the restoration process although no noticeable improvement is achieved in the accuracy of restoration. Thus, it is not preferable that a value falls below the lower limit of Conditional Expression (4).

When a value exceeds the upper limit of Conditional Expression (4), the size of the area in the bright field image becomes too large. In this case, the proportion of the distal pixels in the peripheral pixels becomes too large. The shape of the point spread function corresponding to the distal pixels is significantly different from the shape of the point spread function corresponding to the central pixel. Therefore, reduction of the accuracy of restoration in the peripheral pixels is noticeable. As a result, the accuracy of restoration is reduced in the entire restored image.

By satisfying Conditional Expression (4), it is possible to both maintain the accuracy of restoration and reduce the time taken for the restoration process.

Instead of Conditional Expression (4), the following Conditional Expression (4') may be satisfied.

$$10 < dxsplit/D < 75 \qquad (4')$$

In the sample image acquisition device of the present embodiment and the sample image generation device of the present embodiment, it is preferable that the processor sets, in the virtual area, a point light source that emits a virtual light beam, and calculates the point spread function using a first wavefront from the point light source serving as a wave source.

The point spread function is an optical image of a point light source formed by an optical system. In the sample image acquisition device of the present embodiment, the point spread function is calculated during execution of the process of restoring the image. The final refractive index distribution is used in calculation of the point spread function. Since the final refractive index distribution is set in the virtual area, a point light source is set in the virtual area. This point light source is a virtual light source.

Furthermore, it is possible to represent light by a wavefront. The point spread function can be considered to be formed by propagation of a wavefront emitted from a point light source through an object space, an optical system, and an image space. Then, a wavefront from a virtual light source serving as a wave source is set, and this wavefront is defined as a first wavefront. By using this first wavefront, it is possible to calculate the point spread function.

In the sample image acquisition device of the present embodiment, it is preferable that the processor calculates a second wavefront emitted from the estimation sample, using the first wavefront and the final refractive index distribution included in a range in which the virtual light beam travels, calculates a third wavefront in a focal plane of the virtual observation optical system, using the second wavefront, calculates an intensity distribution corresponding to the third wavefront, and calculates the point spread function, using the intensity distribution corresponding to the third wavefront.

The virtual area group includes virtual areas included in a range in which the virtual light beam travels. The number of virtual areas included in the virtual area group is equal to or greater than zero. If the number of virtual areas included in the virtual area group is not zero, the first wavefront propagates through several virtual areas and is emitted from the estimation sample.

A wavefront emitted from the estimation sample is defined as a second wavefront. The first wavefront is a wavefront before propagating through the virtual area group, whereas the second wavefront is a wavefront after propagating through the virtual area group. Thus, the wavefront shape differs between the first wavefront and the second wavefront. It is possible to calculate the second wavefront based on the first wavefront and the final refractive index distribution of the virtual area group.

Since the second wavefront is incident on the virtual observation optical system, a point spread function is formed based on the second wavefront. The point spread function is conjugate to the wavefront positioned at the focal plane of the virtual observation optical system. However, since the wavefront positioned at the focal plane of the virtual observation optical system is the first wavefront, the second wavefront is not positioned at the focal plane of the virtual observation optical system.

A new wavefront at the focal plane of the virtual observation optical system is defined as a third wavefront. It is possible to calculate the third wavefront by propagating the second wavefront to the focal plane of the virtual observation optical system. The estimation sample is not present between the position of the second wavefront and the third wavefront. Thus, the final refractive index distribution in the virtual area is not used in calculation of the third wavefront.

The third wavefront is positioned at the focal plane of the virtual observation optical system. Thus, the point spread function is calculated based on the third wavefront. The point spread function represents an intensity distribution of light. Thus, the intensity distribution corresponding to the third wavefront is calculated. Then, the point spread function may be calculated using the calculated intensity distribution.

In the sample image acquisition device of the present embodiment, it is preferable that the processor divides the virtual area into a plurality of minute areas, sets the final refractive index distribution in each of the minute areas, calculates a point spread function corresponding to the minute area as a minute point spread function, using the final refractive index distribution of the minute area, and calculates the point spread function, using the minute point spread function.

If it is possible to use a detailed final refractive index distribution, it is possible to accurately calculate a point spread function. The greater the number of virtual areas or the smaller the area of the virtual area, the more detailed final refractive index distribution can be set. Then, one virtual area is divided into a plurality of minute areas. In this case, since it is possible to set the final refractive index distribution for each minute area, it is possible to set a detailed final refractive index distribution.

If it is possible to set the final refractive index distribution for each minute area, it is possible to calculate the point spread function for each minute area. In this case, it is possible to calculate the point spread function of one virtual area, using the point spread function of the minute area. Therefore, it is possible to accurately calculate the point spread function. As a result, it is possible to restore an image with high accuracy.

It is preferable that the sample image acquisition device of the present embodiment includes a light source configured to emit excitation light toward the first optical system, and the processor calculates an excitation light intensity at a position of the point light source, calculates a fluorescence intensity distribution, using the intensity distribution corresponding to the third wavefront and the excitation light intensity, and calculates the point spread function, using the fluorescence intensity distribution.

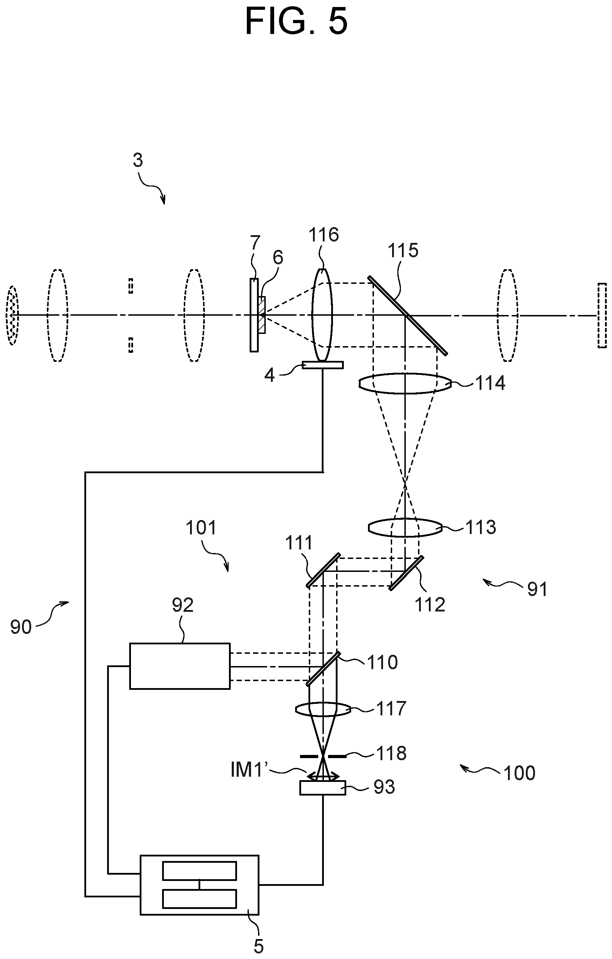

Fig. 5 is a diagram illustrating another sample image acquisition device of the present embodiment. The same component as that in Fig. 1 is denoted by the same numeral and a description thereof is omitted.

A sample image acquisition device 90 includes a first optical system 91, a second optical system 3, a moving mechanism 4, and an image generation unit 5. A first light source 92 is disposed to illuminate a sample 6. An optical image of the sample 6 is detected by a photodetector 93. A photomultiplier tube (PMT), an avalanche photodiode (APD), or a silicon photomultiplier (SiPM) is used for the photodetector 93.

In the sample image acquisition device 90, the same second optical system 3 as in the sample image acquisition device 1 is used. Thus, the first optical system 91 will be described. Furthermore, the second optical system 3 is illustrated by dotted lines for reference.

For example, it is possible to use an optical system of a confocal laser scanning microscope or an optical system of a multiphoton excitation laser scanning microscope, for the first optical system 91. It is assumed that an optical system of a confocal laser scanning microscope is used for the first optical system 91.

The first optical system 91 includes a first observation optical system 100 and a first illumination optical system 101. The first observation optical system 100 is positioned in an optical path between the sample 6 and a first optical image IM1'.

In the sample image acquisition device 1, since the sample 6 is illuminated by a plane, a planar optical image is formed. In contrast, in the sample image acquisition device 90, the sample 6 is illuminated by a point as described below, a point-like optical image is formed. For convenience, the first optical image IM1' is represented by an arrow in the same manner as the first optical image IM1.

The first observation optical system 100 and the first illumination optical system 101 have a common optical system. The common optical system includes a dichroic mirror 110, a mirror 111, a mirror 112, a pupil projection lens 113, an imaging lens 114, a mirror 115, and an objective lens 116.

In Fig. 5, dashed lines are drawn to represent illumination light. In the common optical system, illumination light and imaging light travel through the same optical path. Although a solid line representing the imaging light is not drawn, the imaging light travels through an optical path between the sample 6 and the dichroic mirror 110.

The first observation optical system 100 includes the common optical system, a confocal lens 117, and a confocal pinhole 118. The first illumination optical system 101 includes the common optical system but may further include a beam expander. The beam expander is disposed between the first light source 92 and the dichroic mirror 110.

The first light source 92 is a light source that emits excitation light toward the first optical system 91. A laser is used for the first light source 92. Since laser light is collimated light, the first light source 92 is a point light source. The laser light is used as excitation light.

The laser light emitted from the first light source 92 is reflected by the dichroic mirror 110. The laser light traveling through the common optical system reaches the objective lens 116. Since laser light is collimated light, a spot of excitation light is formed at the focal position by the objective lens 116.

In the sample 6, fluorescence is produced from the position of the spot of excitation light. The fluorescence travels through the common optical system, is transmitted through the dichroic mirror 110, and then focused by the confocal lens 117. Since the confocal pinhole 118 is disposed at the focusing position, a spot of fluorescence is formed on the confocal pinhole 118. The fluorescence passing through the confocal pinhole 118 is detected by the photodetector 93.

Since the sample 6 is illuminated by a point, only an optical image at one point of the sample 6 can be obtained. In the sample image acquisition device 90, the mirror 111 is deflected in the X axis direction, and the mirror 112 is deflected in the Y axis direction. The sample 6 is two-dimensionally scanned because of the deflection of the two mirrors. As a result, a planar fluorescent image is finally obtained, in the same manner as the fluorescent image in the sample image acquisition device 1.

In the sample image acquisition device 90, a plurality of bright field images and a plurality of fluorescent images are generated in the same manner as in the sample image acquisition device 1. Thus, it is possible to restore an image using the point spread function.

In the sample image acquisition device 90, the first optical image and the second optical image are formed at different positions. Furthermore, the photodetector 93 is used to capture the first optical image, and the imager 10 is used to capture the second optical image. Therefore, misalignment occurs between the position of the sample in the fluorescent image and the position of the sample in the bright field image.

However, even in the sample image acquisition device 90, it is possible to align the fluorescent image with the bright field image before calculating the estimation image, as described above. It is therefore possible to calculate the point spread function corresponding to the area of the fluorescent image with high accuracy. As a result, it is possible to restore an image with high accuracy.

Fluorescence is produced when a fluorescent dye is irradiated with excitation light. The light intensity of excitation light affects the intensity distribution of fluorescence. Thus, the light intensity of excitation light and the intensity distribution of fluorescence are used in calculation of the point spread function.

As described above, it is possible to use an intensity distribution corresponding to the third wavefront in calculation of the point spread function. Then, a fluorescence intensity distribution for use in calculation of the point spread function may be calculated using the intensity distribution corresponding to the third wavefront and the light intensity of excitation light.

The following features (a), (b), (c), and (d) are related to the point spread function used for image restoration. The focal position is the focal position of the objective lens. The conjugate position is a position conjugate to the focal position.

(a) The sample is illuminated by a spot of excitation light formed at the focal position.
(b) Fluorescence is produced from the position of the spot of excitation light.
(c) A spot of fluorescence is formed at the conjugate position.
(d) Fluorescence is detected through the confocal pinhole disposed at the conjugate position.

[Mathematical Formula 2] Based on these features, a point spread function $PSF_{CFM}(r)$ used for image restoration is represented by the following Expression (5). r represents three-dimensional coordinates (x, y, z).

$$PSF_{CFM}(r) = PSF_{ex}(-r) \times [PSF_{em}(r) * PH(-r)] \qquad (5)$$

where

PSF$_{ex}$(**r**) is a point spread function of excitation light,
PSF$_{em}$(**r**) is a point spread function of fluorescence,
PH(**r**) is a transfer function of the confocal pinhole, and
* is convolution.

For a better understanding of Expression (5), for example, the following literature can be referred to.

Shinichi Hayashi "Resolution doubling using confocal microscopy via analogy with structured illumination microscopy", Japanese Journal of Applied Physics 55, 082501 (2016)

The point spread function of excitation light will be described. The spot of excitation light is formed by an illumination optical system. However, for simplicity, it is assumed that the spot of excitation light is formed by an objective lens.

Since the light source is a point light source, an optical image of the point light source is formed at the focal position. This optical image is a spot of excitation light and also represents the point spread function of excitation light. When the focal position is positioned inside the sample, a spot of excitation light is formed inside the sample. Therefore, it is necessary to calculate the point spread function of excitation light at the focal position, in consideration of the refractive index distribution of the sample.

When considered in terms of wavefronts, the wavefront of excitation light propagates from the objective lens toward the sample and reaches the surface of the sample. The wavefront incident from the surface of the sample propagates through the inside of the sample and reaches the position of the spot of excitation light. It is possible to obtain the point spread function of the excitation light from the wavefront at the position of the spot of excitation light.

In order to obtain the wavefront at the position of the spot of excitation light, it is necessary to obtain a wavefront immediately before being incident on the sample and a wavefront propagating through the inside of the sample. Since the wavefronts are obtained by calculation, an estimation sample is used for the sample.

It is possible to represent the estimation sample by a structure of thin layers stacked at distances $\Delta z$. It is assumed that the total number of thin layers is L. It is assumed that a first layer is positioned farthest away from the objective lens and an Lth layer is positioned closest to the objective lens.

The wavefront immediately before being incident on the sample will be described. The wavefront immediately before being incident on the sample (hereinafter referred to as the "incident wavefront") is a wavefront that has not passed through the sample, as a matter of course. Furthermore, the incident wavefront is a wavefront that finally reaches the position of the spot of excitation light. Therefore, under a condition in which no sample is present, a wavefront is set at the position of the spot of excitation light, and a wavefront when propagating to the position of the incident wavefront is obtained.

A description is given using $P_{ex}(x_p, y_p, z_p)$, $z_{Pin}$, $U_p(x,y)$, and $U_{edge}(x,y)$.

$P_{ex}(x_p, y_p, z_p)$ represents the position of the spot of excitation light.

$z_{Pin}$ represents the Z position of the incident wavefront.

$U_p(x,y)$ represents a wavefront set in a plane including the position $P_{ex}(x_p, y_p, z_p)$ and being perpendicular to the optical axis,
under a condition in which no sample is present.

$U_{edge}(x,y)$ represents a wavefront when the wavefront $U_p(x,y)$ propagates to the Z position $z_{Pin}$.

The wavefront $U_p(x,y)$ at $z = z_p$ under a condition in which no sample is present is represented by the following Expression (6).

[Mathematical Formula 3]

$$U_p(x,y) = F_{2D}^{-1}[F_{2D}[A(x,y)] \times P(\xi, \eta)] \qquad (6)$$

where

$F_{2D}$ is a two-dimensional Fourier transform,
$F_{2D}^{-1}$ is a two-dimensional Fourier inverse transform,
$A(x,y)$ is a two-dimensional matrix with a value of 1 at position $P_{ex}(x_p, y_p)$ and a value of 0 at other positions, and
$P(\xi, \eta)$ is a pupil function of the objective lens.

The wavefront $U_{edge}(x,y)$ is represented by the following Expression (7).
[Mathematical Formula 4]

$$U_{edge}(x,y) = F_{2D}^{-1}\left[F_{2D}[U_p(x,y)]exp\left(2\pi i\Delta z_{pe}\sqrt{1/\lambda_{ex}^2 - |\mathbf{u}|^2}\right)\right] \qquad (7)$$

where

$\Delta z_{pe}$ is the distance from the Z position $z_p$ to the Z position $z_{Pin}$,
$\lambda_{ex}$ is the wavelength of excitation light, and
$\mathbf{u}$ is a two-dimensional notation of Fourier space coordinates $(\xi, \eta)$.

Since the wavefront $U_p(x,y)$ is a wavefront when no sample is present, the wavefront $U_{edge}(x,y)$ is also a wavefront when no sample is present. As described above, the incident wavefront is also a wavefront when no sample is present. Thus, the wavefront $U_{edge}(x,y)$ agrees with the incident wavefront in that it is a wavefront when no sample is present.

Furthermore, the wavefront $U_{edge}(x,y)$ is a wavefront when propagating from a plane at $z = z_p$ to a plane at $z = z_{Pin}$. $z = z_{Pin}$ is the position of the incident wavefront. Thus, the wavefront $U_{edge}(x,y)$ also agrees with the incident wavefront with respect to the position of the wavefront.

However, the incident wavefront is a wavefront incident on the sample, whereas the wavefront $U_{edge}(x,y)$ is not incident on the sample because it travels in a direction away from the sample. Thus, the wavefront $U_{edge}(x,y)$ does not agree with the incident wavefront with respect to the direction of travel of the wavefront.

What is needed is a wavefront traveling toward the sample. Then, a wavefront $U^*_{edge}(x,y)$ is obtained from the wavefront $U_{edge}(x,y)$. $U^*$ represents the complex conjugate of $U$. In $U^*$, only the sign of the imaginary part differs from $U$.

The wavefront $U^*_{edge}(x,y)$ is the inverted wavefront of the wavefront $U_{edge}(x,y)$ in the Z axis direction. Therefore, the wavefront $U^*_{edge}(x,y)$ agrees with the incident wavefront not only in that it is a wavefront when no sample is present and with respect to the position of the wavefront, but also with respect to the direction of travel of the wavefront. Thus, the wavefront $U^*_{edge}(x,y)$ can be considered as the incident wavefront.

The wavefront propagating through the inside of the sample will be described. A calculation method called a beam propagation method (BPM) is used to calculate the wavefront propagating through the inside of the sample. BPM is disclosed, for example, in the following literature.

M D Feit, J A Fleck Jr, "Light propagation in graded-index optical fibers", Appl. Opt. 17, 3990-3998 (1978).

In BPM, a stack of thin layers is used as a sample. In the thin layers, a wavefront emitted from a thin layer is calculated based on the incident wavefront and the amplitude transmittance distribution. The wavefront emitted from the thin layer propagates to the next thin layer. Thus, the wavefront emitted from the thin layer is an original wavefront of the wavefront incident on the next thin layer. By performing this calculation on each of the thin layers, it is possible to calculate the wavefront propagating through the inside of the sample.

As described above, the estimation sample is a stack of thin layers. The first layer is positioned farthest away from the objective lens, and the Lth layer is positioned closest to the objective lens. Thus, the incident wavefront propagates through the inside of the sample from the Lth layer toward the first layer.

A final refractive index distribution is set in each of the thin layers. Thus, it is possible to set the amplitude transmittance distribution in the thin layer, using the final refractive index distribution. The amplitude transmittance distribution $T_m(x,y)$ in the mth layer is represented by the following Expression (8).
[Mathematical Formula 5]

$$T_m(x,y) = exp(ik_{ex}dn(x,y,z_m)\Delta z) \qquad (8)$$

where

m = 1, 2, ..., L,
$k_{ex} = 2\pi/\lambda_{ex}$,
$dn(x,y,z_m) = n(x,y,z_m) - n_0$,
$\lambda_{ex}$ is the wavelength of excitation light,
$n(x,y,z_m)$ is the final refractive index distribution in the mth thin layer,
$n_0$ is the refractive index of the medium, and

Δz is the distance between two adjacent thin layers.

For example, when the sample is a mass of cells, the mass of cells is held together with phosphate buffered saline (PBS) in a container. Thus, the medium is PBS. The refractive index of PBS is 1.333, the same as that of water, and is constant regardless of position in the container.

A wavefront $G_m(x,y)$ emitted from the mth layer is represented by the following Expression (9).
[Mathematical Formula 6]

$$G_m(x,y) = T_m(x,y)U_m(x,y) \qquad (9)$$

where

$T_m(x,y)$ is the amplitude transmission distribution in the mth layer, and
$U_m(x,y)$ is the wavefront incident on the mth layer.

As described above, a wavefront propagates through the inside of the sample from the Lth layer toward the first layer. The wavefront $G_m(x,y)$ is the wavefront emitted from the mth layer, but also the original wavefront of the wavefront incident on the (m-1)th layer. Since the distance between two adjacent thin layers is Δz, the wavefront $G_m(x,y)$ propagates by Δz to reach the (m-1)th layer. The wavefront reaching the (m-1)th layer is the wavefront incident on the (m-1)th layer.

It is possible to obtain the wavefront propagating from one thin layer to another thin layer, based on an angular spectrum method. In the angular spectrum method, decomposition of one wavefront into a plurality of plane waves by Fourier transform, shift of the distance Δz in each plane wave, and combination of a plurality of plane waves into one wavefront by inverse Fourier transform are performed.

When the angular spectrum method is used, a wavefront $U_{m-1}(x,y)$ incident on the (m-1)th layer is represented by the following Expression (10).
[Mathematical Formula 7]

$$U_{m-1}(x,y) = F_{2D}^{-1}\left[F_{2D}[G_m(x,y)]exp\left(2\pi i\Delta z\sqrt{1/\lambda_{ex}^2 - |u|^2}\right)\right] \qquad (10)$$

The wavefront $U_{m-1}(x,y)$ is the wavefront incident on the (m-1)th layer. Thus, when a wavefront $G_{m-1}(x,y)$ emitted from the (m-1)th layer is to be obtained, $U_{m-1}(x,y)$ may be used instead of $U_m(x,y)$ in Expression (9).

In Expression (10), the wavefront incident on the (m-1)th layer is obtained using the wavefront emitted from the mth layer. If Expression (10) is used to obtain the wavefront incident on the Lth layer, the wavefront on the left side is $U_L(x,y)$, and the wavefront on the right side is $G_{L+1}(x,y)$. The wavefront $G_{L+1}(x,y)$ represents the wavefront emitted from the (L+1)th layer.

However, as described above, the Lth layer is positioned closest to the objective lens. Therefore, there is no thin layer on the objective lens side of the Lth layer. In other words, the (L+1)th layer does not exist. In this case, it is impossible to obtain the wavefront $U_L(x,y)$ from Expression (10) because the wavefront $G_{L+1}(x,y)$ does not exist.

The wavefront $U_L(x,y)$ is positioned immediately before the sample and therefore can be considered as the incident wavefront. As described above, the wavefront $U^*_{edge}(x,y)$ can also be considered as the incident wavefront. Thus, $U^*_{edge}(x,y)$ may be used as the wavefront $U_L(x,y)$.

As shown in the following Expression (11), it is possible to obtain the wavefront $G_L(x,y)$ by using $U^*edge(x,y)$.
[Mathematical Formula 8]

$$G_L(x,y) = T_L(x,y)U^*_{edge}(x_{in},y_{in}) \qquad (11)$$

When the wavefront $G_L(x,y)$ is obtained, it is possible to repeatedly obtain the wavefront incident on the thin layer and the wavefront emitted from the thin layer, for the thin layers positioned on the first layer side of the Lth layer, based on Expressions (9) and (10). As a result, it is possible to sequentially obtain wavefronts from the Lth layer toward the first layer.

It is assumed that a spot of excitation light is generated on the first layer side of the nth layer. Furthermore, it is assumed that the wavefront emitted from the nth layer is a wavefront $G_n(x,y)$. It is possible to obtain the wavefront $G_n(x,y)$ based on Expressions (9) and (10).

In addition, it is possible to obtain up to the wavefront $G_1(x,y)$ based on Expressions (9) and (10). The wavefront at each Z position is defined as $G_z(x,y)$, and it is possible to obtain the point spread function $PSF_{ex}(r)$ of excitation light by squaring the absolute value of the wavefront $G_z(x,y)$ and arranging the resulting values along the optical axis.

The point spread function of fluorescence will now be described. A spot of fluorescence is formed by an observation optical system. However, for simplicity, it is assumed that the spot of fluorescence is formed by an objective lens.

When a fluorescent dye is present at the position of the spot of excitation light, fluorescence is produced from the position of the spot of excitation light. The fluorescence is focused by the objective lens, and an optical image of the fluorescence is formed at the conjugate position. This optical image is the spot of fluorescence and also represents the point spread function of fluorescence.

When the focal position is positioned in the interior of the sample, the spot of excitation light is formed inside the sample, so that fluorescence is also produced inside the sample. Therefore, it is necessary to calculate the point spread function of fluorescence, in consideration of the refractive index distribution of the sample.

When considered in terms of wavefronts, a wavefront of fluorescence propagates through the inside of the sample toward the objective lens and reaches the surface of the sample. The wavefront emitted from the surface of the sample propagates through the space between the sample and the objective lens and is incident on the objective lens. The wavefront incident on the objective lens reaches the conjugate position, that is, the position of the spot of fluorescence. A pinhole is disposed at the conjugate position. Thus, it is possible to obtain the point spread function from the wavefront and the pinhole at the position of the spot of fluorescence.

In order to obtain the wavefront at the position of the spot of fluorescence, it is necessary to obtain the wavefront emitted from the sample and the wavefront at the focal position. Since the wavefronts are obtained by calculation, an estimation sample is used for the sample.

The wavefront emitted from the sample will now be described. As described above, a spot of excitation light is generated on the first layer side of the nth layer. Since fluorescence is produced from the spot of excitation light, fluorescence is produced inside the sample. The wavefront of the fluorescence propagates through the inside of the sample from the first layer toward the Lth layer.

As described above, the wavefront $U_m(x,y)$ is the wavefront incident on the mth layer, and the original wavefront of the wavefront $U_m(x,y)$ is the wavefront $G_{m-1}(x,y)$ emitted from the (m-1)th layer. Since the distance between two adjacent thin layers is $\Delta z$, the wavefront $G_{m-1}(x,y)$ propagates by $\Delta z$ to reach the mth layer. The wavefront reaching the mth layer is the wavefront incident on the mth layer.

When the angular spectrum method is used, the wavefront $U_m(x,y)$ incident on the mth layer is represented by the following Expression (12).

[Mathematical Formula 9]

$$U_m(x,y) = F_{2D}^{-1}\left[ F_{2D}[G_{m-1}(x,y)]exp\left( 2\pi i \Delta z \sqrt{1/\lambda_{em}^2 - |u|^2} \right) \right] \qquad (12)$$

where
$\lambda_{em}$ is the wavelength of fluorescence.

The wavefront $U_m(x,y)$ is the wavefront incident on the mth layer. Thus, the wavefront $G_m(x,y)$ emitted from the mth layer is represented by the following Expressions (13) and (14).

[Mathematical Formula 10]

$$T'_m(x,y) = exp(ik_{em}dn(x,y,z_m)\Delta z) \qquad (13)$$

[Mathematical Formula 11]

$$G_m(x,y) = T'_m(x,y)U_m(x,y) \qquad (14)$$

where

$k_{em} = 2\pi/\lambda_{em}$, and

$T'_m(x,y)$ is the amplitude transmittance distribution in the mth layer.

As described above, a spot of excitation light is generated on the first layer side of the nth layer. Since fluorescence is produced from the spot of excitation light, fluorescence is produced on the first layer side of the nth layer.

In Expression (11), the wavefront incident on the mth layer is obtained using the wavefront emitted from the (m-1) th layer. If Expression (11) is used to obtain the wavefront incident on the nth layer, the wavefront on the left side is $U_n(x,y)$, and the wavefront on the right side is $G_{n-1}(x,y)$. The wavefront $G_{n-1}(x,y)$ represents the wavefront emitted from the (n-1)th layer.

A thin layer exists on the first layer side of the nth layer. Thus, the (n-1) layer exists. However, the emission point of fluorescence is positioned on the Lth layer side of the (n-1)th layer. In this case, since no wavefront is emitted from the (n-1) th layer toward the nth layer, the wavefront $G_{n-1}(x,y)$ does not exist. Thus, it is impossible to obtain the wavefront incident on the nth layer from Expression (11).

The wavefront incident on the nth layer is a wavefront emitted from the emission point of fluorescence. If the emission point of fluorescence is considered as a point light source, the wavefront $U_{em}(x,y)$ emitted from the emission point of fluorescence can be represented by a two-dimensional matrix with a value of 1 at position $P_{ex}(x_p,y_p)$ and a value of 0 at other positions. Thus, $U_{em}(x,y)$ may be used as $U_n(x,y)$.

Using $U_{em}(x,y)$, the wavefront $G_n(x,y)$ emitted from the nth layer is represented by the following Expression (15).

[Mathematical Formula 12]

$$G_n(x,y) = T'_n(x,y)U_{em}(x,y) \qquad (15)$$

When the wavefront $G_n(x,y)$ is obtained, it is possible to repeatedly obtain the wavefront incident on the thin layer and the wavefront emitted from the thin layer, for the thin layers positioned on the Lth layer side of the nth layer, based on Expressions (13) and (14). As a result, it is possible to sequentially obtain wavefronts from the first layer toward the Lth layer.

As described above, the Lth layer is positioned closest to the objective lens. Thus, the wavefront $G_L(x,y)$ is the wavefront emitted from the sample.

The wavefront at the focal position will now be described. As described above, it is possible to obtain the point spread function from the wavefront at the position of the spot of fluorescence. The spot of fluorescence is formed at the conjugate position. The conjugate position is a position conjugate to the focal position. Thus, in order to obtain the wavefront at the conjugate position, the wavefront at the focal position is necessary.

A description will be given using $P_{OB}(x,y,z)$, $P_{FL}(x,y,z)$, $P_L(x,y,z)$, $P_{CON}(x,y,z)$, $U^*_L(x,y,z)$, $U_{OB}(x,y,z)$, and $U_{PH}(x,y,z)$. The z coordinates are omitted as appropriate in the following description.

$P_{OB}(x,y,z)$ represents the focal position of the objective lens. The Z position $z_{OB}$ of $P_{OB}$ serves as the focal plane of the objective lens.

$P_{FL}(x,y,z)$ represents the position where fluorescence is produced.

$z_L$ represents the Z position of the wavefront $G_L(x,y)$.

$P_{CON}(x,y,z)$ represents the position conjugate to the position $P_{OB}(x,y,z)$. The Z position $z_{CON}$ of $P_{CON}$ is a plane conjugate to the focal plane of the objective lens.

$G^*(x,y)$ represents the complex conjugate of the wavefront $G_L(x,y)$.

$U_{OB}(x,y)$ represents a wavefront when the wavefront $G^*_L(x,y)$ propagates to the z position of the position $P_{OB}$.

$U_{PH}(x,y)$ represents a wavefront when the wavefront $G_{OB}(x,y)$ propagates to the z position of the position $P_{CON}$.

$P_{FL}(x,y,z)$ is the position where fluorescence is produced. In contrast, the Z position $z_L$ is the position of the wavefront $G_L(x,y)$ and therefore the position where fluorescence is emitted from the sample. Thus, the wavefront $G_L(x,y)$ does not agree with the wavefront $U_{OB}(x,y)$ with respect to the position of the wavefront.

In order to obtain the wavefront $U_{OB}(x,y)$, the wavefront $G_L(x,y)$ may be propagated to the Z position $z_{OB}$. The direction of travel of the wavefront $G_L(x,y)$ is a direction away from the position $P_{OB}$. In order to propagate the wavefront $G_L(x,y)$ to the Z position $z_{OB}$, it is necessary to reverse the direction of travel of the wavefront $G_L(x,y)$.

Then, a wavefront $U^*_L(x,y)$ is obtained from the wavefront $U_L(x,y)$. The wavefront $U^*_L(x,y)$ is the inverted wavefront of the wavefront $U_L(x,y)$ in the Z axis direction. It is possible to obtain the wavefront $U_{OB}(x,y)$ by propagating the wavefront $U^*_L(x,y)$ to the Z position $z_{OB}$. The wavefront $U_{OB}(x,y)$ is represented by the following Expression (16).

[Mathematical Formula 13]

$$U_{OB}(x,y) = F_{2D}^{-1}\left[F_{2D}[U_L^*(x,y)]\exp\left(2\pi i \Delta z_{LOB}\sqrt{1/\lambda_{em}^2 - |u|^2}\right)\right] \qquad (16)$$

where

$\Delta z_{LOB}$ is the distance from the Z position $z_L$ to the Z position $z_{OB}$.

Since the position $P_{CON}(x,y)$ is conjugate to the position $P_{OB}(x,y)$, it is possible to obtain $U_{PH}(x,y)$ from the wavefront $U_{OB}(x,y)$. $U_{PH}(x,y)$ is represented by the following Expression (17).

[Mathematical Formula 14]

$$U_{PH}(x,y) = F_{2D}^{-1}\left[F_{2D}[U_{OB}(x,y)] \times P(\xi,\eta)\right] \qquad (17)$$

$U_{PH}(x,y)$ is the wavefront at the Z position $z_{CON}$. Thus, it is possible to obtain the intensity distribution at the Z position $z_{CON}$ by squaring the absolute value of the wavefront $U_{PH}(x,y)$. This is the fluorescence intensity distribution at the Z position $z_{CON}$ when the focal plane of the objective lens is $z_{OB}$. By obtaining the fluorescence intensity distribution by moving the focal plane of the objective lens at $z_{OB}$ from the first plane to the Lth plane and arranging the fluorescence intensity distributions in the optical axis direction, it is possible to obtain the point spread function $PSF_{em}(\mathbf{r})$ of fluorescence.

When the point spread function $PSF_{ex}(\mathbf{r})$ and the point spread function $PSF_{em}(\mathbf{r})$ are obtained, it is possible to obtain the point spread function $PSF_{CFM}(\mathbf{r})$ based on Expression (5). The three point spread functions all are point spread functions corresponding to a single point in the Nth layer. In other words, these point spread functions are point spread functions corresponding to one area in a single fluorescent image.

Then, each point spread function is obtained for all areas as well as for all fluorescent images. In calculation of the point spread function $PSF_{ex}(\mathbf{r})$ and the point spread function $PSF_{em}(\mathbf{r})$, a refractive index distribution with high accuracy is used for the final refractive index distribution in the estimation sample. In this case, it is possible to use a point spread function with high accuracy as the point spread function $PSF_{CFM}(\mathbf{r})$. Thus, it is possible to restore an image with high accuracy.

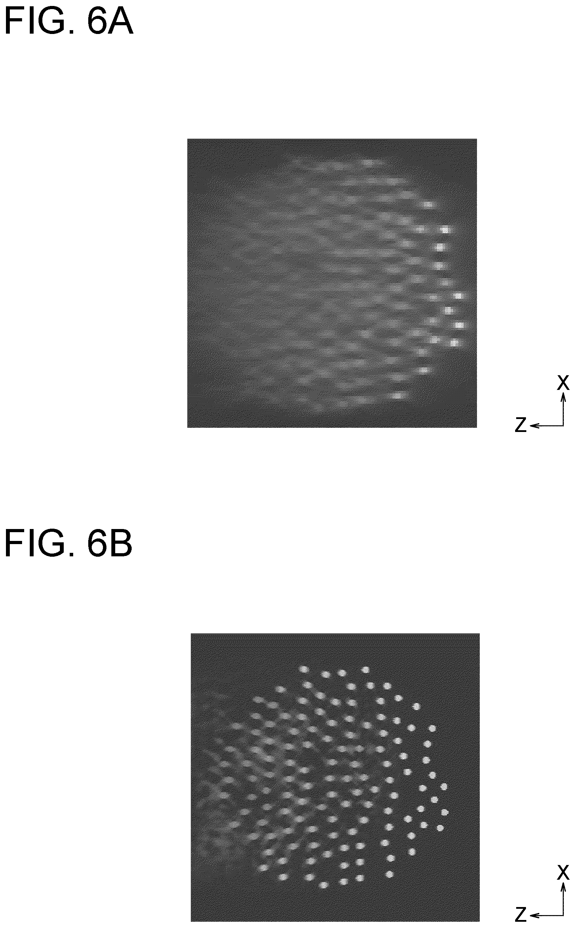

Figs. 6A and 6B are diagrams illustrating a degraded image and a restored image. Fig. 6A is a diagram illustrating a degraded image. Fig. 6B is a diagram illustrating a restored image.

The virtual image is an XZ image. The right end of the image represents the image of the top surface of the sample, and the left end of the image represents the image of the bottom surface of the sample. The image quality is higher in the restored image than in the degraded image over the entire range from the top surface to the bottom surface of the sample.

In the sample image acquisition device of the present embodiment, it is preferable that the processor calculates the excitation light intensity, using a refractive index distribution at an excitation light wavelength.

The point spread function $PSF_{ex}(\mathbf{r})$ is the intensity distribution of light generated based on excitation light. The point spread function $PSF_{em}(\mathbf{r})$ is the intensity distribution of light generated based on fluorescence. The final refractive index distribution is used in calculation of the point spread function.

Since the refractive index varies with wavelength, the final refractive index distribution also varies with wavelength. The wavelength of excitation light is different from the wavelength of fluorescence. Then, by calculating the excitation light intensity using the refractive index distribution at the wavelength of excitation light, it is possible to calculate the point spread function $PSF_{ex}(\mathbf{r})$ with high accuracy. As a result, it is possible to restore an image with high accuracy.

In the sample image acquisition device of the present embodiment and the sample image generation device of the present embodiment, it is preferable that the processor calculates a provisional point spread function for each area of the fluorescent image before calculating the point spread function, sets, as a reference value, an intensity peak value of a point spread function when the estimation sample is not present, sets, as a provisional intensity peak value, an intensity peak value of the provisional point spread function, and classifies each of the virtual areas into a target area and a non-target area by comparing the provisional intensity peak value with the reference value, in which the target area is divided to be smaller than the non-target area. Here, the target area is an area where the provisional intensity peak value is less than 1/5 of the reference value, and the non-target area is an area where the provisional intensity peak value is equal to or greater than 1/5 of the reference value.

When the sample is a mass of cells, light scattering occurs in the interior of the mass of cells. The larger the scattering, the more significantly the shape of the point spread function changes. As described above, the point spread function is calculated at the center of the virtual area. Then, in the area of the fluorescent image corresponding to the virtual area, the restoration process is performed using the same point spread function for each pixel.

If a point spread function with a significantly changed shape is used for the peripheral pixel, reduction of the accuracy of restoration is noticeable in the distal pixel. Even when the same point spread function is used for the proximal pixel, reduction of the accuracy of restoration is small in the proximal pixel. Then, the point spread function with a significantly changed shape is used only for the proximal pixel.

In order to use the point spread function only for the proximal pixel, the size of the area of the fluorescent image may be reduced. The size of the area of the fluorescent image is equal to the size of the virtual area. Thus, the determination as to whether to reduce the size of the area of the fluorescent image can be replaced by the determination as to whether to reduce the size of the virtual area.

The determination as to whether to reduce the size of the virtual area may be determined by the shape of the point spread function. In the point spread function, the more significant the change in shape, the smaller the intensity peak value. Thus, the determination may be made based on the intensity peak value of the point spread function.

In order to make a determination, criteria are needed. In the sample image acquisition device of the present embodiment and the sample image acquisition device of the present embodiment, the intensity peak value of the point spread function when the estimation sample is not present is used as a reference value.

The processor calculates a provisional point spread function for each area of the fluorescent image before calculating the point spread function. Next, the intensity peak value of the provisional point spread function is set as a provisional intensity peak value. Then, the provisional intensity peak value is compared with the reference value, and each of the virtual areas is classified into a target area and a non-target area.

The target area is an area where the provisional intensity peak value is less than 1/5 of the reference value. The non-target area is an area where the provisional intensity peak value is equal to or greater than 1/5 of the reference value.

Compared with the non-target area, the provisional intensity peak value is lower in the target area. This means that the shape of the point spread function significantly changes in the target area. As described above, if a point spread function with a significantly changed shape is used for the peripheral pixels, reduction of the accuracy of restoration is noticeable in the distal pixels.

Then, the target area is divided to be smaller than the non-target area. By reducing the size of the target area, it is possible to increase the proportion of proximal pixels in the peripheral pixels. Therefore, even when the point spread function corresponding to the central pixel is used, reduction in the accuracy of restoration in the peripheral pixels can be suppressed. As a result, it is possible to restore an image with high accuracy.

[Reference Signs List]

| | |
|---|---|
| 1 | sample image acquisition device |
| 2 | first optical system |
| 3 | second optical system |
| 4 | moving mechanism |
| 5 | image generation unit |
| 6 | sample |
| 7 | stage |
| 8 | first light source |
| 9 | second light source |
| 10 | imager |
| 20 | first observation optical system |
| 21 | first illumination optical system |
| 22 | first objective lens |
| 23 | absorption filter |
| 24 | imaging lens |
| 25 | collector lens |
| 26 | relay lens |
| 27 | relay lens |
| 28 | excitation light filter |
| 29 | dichroic mirror |
| 30 | second observation optical system |

| 31 | second illumination optical system |
|---|---|
| 32 | second objective lens |
| 33 | imaging lens |
| 34 | collector lens |
| 35 | aperture stop |
| 36 | condenser lens |
| 51 | memory |
| 52 | processor |
| 53 | input/output unit |
| 60 | light source |
| 61 | substrate |
| 62 | light-emitting part |
| 70 | aperture member |
| 71 | transmission part |
| 72 | light-shielding part |
| 80 | aperture member |
| 81 | first transmission part |
| 82 | second transmission part |
| 83 | light-shielding part |
| 90 | sample image acquisition device |
| 91 | first optical system |
| 92 | first light source |
| 93 | photodetector |
| 100 | first observation optical system |
| 101 | first illumination optical system |
| 110 | dichroic mirror |
| 111 | mirror |
| 112 | mirror |
| 113 | pupil projection lens |
| 114 | imaging lens |
| 115 | mirror |
| 116 | objective lens |
| 117 | confocal lens |
| 118 | confocal pinhole |
| IM1 | first optical image |
| IM1' | first optical image |
| IM2 | second optical image |
| AX1 | optical axis of first optical system |
| AX2 | optical axis of second optical system |
| OBJ | sample |
| FP | focal plane |
| AX | optical axis |
| OS | optical system |
| IP | image plane |
| IMG | optical image |
| PIC | image of optical image |

**Claims**

1. A sample image acquisition device comprising:

   a first optical system configured to form a first optical image of a sample;
   a second optical system configured to form a second optical image of the sample;
   a moving mechanism; and
   an image generation unit, wherein
   the first optical system includes an observation optical system positioned in an optical path between the sample and the first optical image,
   an optical axis of the first optical system and an optical axis of the second optical system coincide at a position of the sample,

the moving mechanism changes a distance between the sample and a first objective lens of the first optical system and a distance between the sample and a second objective lens of the second optical system,

a fluorescent image group including a plurality of fluorescent images and a bright field image group including a plurality of bright field images are generated by changing the distances,

the fluorescent image group is generated based on the first optical image,

the bright field image group is generated based on the second optical image,

an estimation sample is a modeled sample of the sample,

a virtual observation optical system is a modeled optical system of the observation optical system,

the image generation unit includes

a memory configured to store the fluorescent image group and the bright field image group, and
a processor, and

the processor

calculates an estimation image of the estimation sample using a refractive index distribution of the estimation sample,

calculates, as a final refractive index distribution, the refractive index distribution optimized using each of the bright field images and the estimation image,

divides each of the fluorescent images into a plurality of areas,

sets a virtual area corresponding to each of the areas in the estimation sample,

sets a virtual light beam that travels from the virtual area toward the virtual observation optical system,

calculates a point spread function corresponding to the area, using the final refractive index distribution included in a range in which the virtual light beam travels,

generates, for each of the areas, an image corresponding to the area using the point spread function and the fluorescent image of the area,

combines all of the images to generate an image corresponding to the fluorescent image as a final image,

executes calculation of the final refractive index distribution for each image in the bright field image group, and

executes generation of the final image for each image in the fluorescent image group.

2. The sample image acquisition device according to claim 1, wherein

a common objective lens is disposed in an optical path where the optical axis of the first optical system and the optical axis of the second optical system coincide, and

the first optical image and the second optical image are formed through the common objective lens.

3. The sample image acquisition device according to claim 1, wherein

the second optical system includes an illumination optical system, and
the following Conditional Expression (1) is satisfied:

$$0.1 \leq NAill/NA \leq 1 \qquad\qquad (1)$$

where

NAill is a numerical aperture of the illumination optical system, and
NA is a numerical aperture of the second objective lens.

4. The sample image acquisition device according to claim 1 or 2, wherein the processor aligns the fluorescent image with the bright field image before calculating the estimation image.

5. The sample image acquisition device according to claim 2, wherein

in generation of the fluorescent images, the sample and the common objective lens are changed at a first distance,

in generation of the bright field images, the sample and the common objective lens are changed at a second distance, and

the following Conditional Expression (2) is satisfied:

$$\Delta Z1 < \Delta Z2 \qquad (2)$$

where

$\Delta Z1$ is the first distance, and
$\Delta Z2$ is the second distance.

6. The sample image acquisition device according to claim 5, further comprising a light source configured to emit illumination light toward the second optical system, wherein

the sample in a container filled with liquid is illuminated with the illumination light, and
the following Conditional Expression (3) is satisfied:

$$\Delta Z1 < \Delta Z2 < 2.5 \times n \times \lambda c/NA^2 \qquad (3)$$

where

$n$ is a refractive index of the liquid,
$\lambda c$ is a centroid wavelength of the illumination light, and
$NA$ is a numerical aperture of the second objective lens.

7. The sample image acquisition device according to claim 2 or 3, further comprising a light source configured to emit illumination light toward the second optical system, wherein

the processor divides the bright field image into a plurality of areas, and
the following Conditional Expression (4) is satisfied:

$$2 < dxsplit/D < 200 \qquad (4)$$

where

$D = 1.22 \times \lambda c/(NA + NAill)$,
dxsplit is a length of one side of the area in the bright field image,
$\lambda c$ is a centroid wavelength of the illumination light,
$NA$ is a numerical aperture of the second objective lens, and
$NAill$ is a numerical aperture of the illumination optical system.

8. The sample image acquisition device according to claim 1, wherein the processor

sets, in the virtual area, a point light source that emits the virtual light beam, and
calculates the point spread function, using a first wavefront from the point light source serving as a wave source.

9. The sample image acquisition device according to claim 8, wherein the processor

calculates a second wavefront emitted from the estimation sample, using the first wavefront and the final refractive index distribution included in a range in which the virtual light beam travels,
calculates a third wavefront in a focal plane of the virtual observation optical system, using the second wavefront,
calculates an intensity distribution corresponding to the third wavefront, and
calculates the point spread function, using the intensity distribution.

10. The sample image acquisition device according to claim 1, wherein the processor

divides the virtual area into a plurality of minute areas,
sets the final refractive index distribution in each of the minute areas,
calculates a point spread function corresponding to the minute area as a minute point spread function, using the final refractive index distribution of the minute area, and
calculates the point spread function, using the minute point spread function.

11. The sample image acquisition device according to claim 9, further comprising a light source configured to emit excitation light toward the first optical system,
wherein
the processor

calculates an excitation light intensity at a position of the point light source,
calculates a fluorescence intensity distribution, using the intensity distribution and the excitation light intensity, and
calculates the point spread function, using the fluorescence intensity distribution.

12. The sample image acquisition device according to claim 11, wherein the processor calculates the excitation light intensity, using a refractive index distribution at an excitation light wavelength.

13. The sample image acquisition device according to claim 1, wherein
the processor

calculates a provisional point spread function for each of the areas before calculating the point spread function,
sets, as a reference value, an intensity peak value of a point spread function when the estimation sample is not present,
sets, as a provisional intensity peak value, an intensity peak value of the provisional point spread function, and
classifies each of the virtual areas into a target area and a non-target area by comparing the provisional intensity peak value with the reference value,
the target area is an area where the provisional intensity peak value is less than 1/5 of the reference value,
the non-target area is an area where the provisional intensity peak value is equal to or greater than 1/5 of the reference value, and
the target area is divided to be smaller than the non-target area.

14. A sample image generation device comprising:

a memory configured to store a fluorescent image of a sample and a bright field image of the sample; and
a processor, wherein
the fluorescent image is generated based on a first optical image formed by a first optical system,
the bright field image is generated based on a second optical image formed by a second optical system,
an optical axis of the first optical system and an optical axis of the second optical system coincide at a position of a sample, including a single optical axis,
a plurality of the fluorescent images and a plurality of the bright field images are images at different positions in a direction parallel to the single optical axis,
an estimation sample is a modeled sample of the sample,
the first optical system includes a first observation optical system positioned in an optical path between the sample and the first optical image,
a virtual observation optical system is a modeled optical system of the first observation optical system, and
the processor

calculates an estimation image of the estimation sample, using a refractive index distribution of the estimation sample,
calculates, as a final refractive index distribution, the refractive index distribution optimized using the bright field image and the estimation image,
divides the fluorescent image into a plurality of areas,
sets a virtual area corresponding to each of the areas in the estimation sample,
sets a virtual light beam that travels from the virtual area toward the virtual observation optical system,
calculates a point spread function corresponding to the area, using the final refractive index distribution included in a range in which the virtual light beam travels,

generates, for each of the areas, an image corresponding to the area using the point spread function and the fluorescent image of the area, and

combines all of the images to generate an image corresponding to the fluorescent image.

15. The sample image generation device according to claim 14, wherein
the processor

sets, in the virtual area, a point light source that emits the virtual light beam, and
calculates the point spread function, using a first wavefront from the point light source serving as a wave source.

16. The sample image generation device according to claim 14, wherein

the processor

calculates a provisional point spread function for each of the areas before calculating the point spread function,
sets, as a reference value, an intensity peak value of a point spread function when the estimation sample is not present,
sets, as a provisional intensity peak value, an intensity peak value of the provisional point spread function, and
classifies each of the virtual areas into a target area and a non-target area by comparing the provisional intensity peak value with the reference value,

the target area is an area where the provisional intensity peak value is less than 1/5 of the reference value,
the non-target area is an area where the provisional intensity peak value is equal to or greater than 1/5 of the reference value, and
the target area is divided to be smaller than the non-target area.

# FIG. 1

## FIG. 2A

## FIG. 2B

# FIG. 3

# FIG. 4A

# FIG. 4B

# FIG. 4C

# FIG. 5

## FIG. 6A

## FIG. 6B

## FIG. 7A

## FIG. 7B

## FIG. 7C

Europäisches
Patentamt
European
Patent Office
Office européen
des brevets

**EUROPEAN SEARCH REPORT**

Application Number

EP 25 18 9798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 495 579 A1 (EVIDENT CORP [JP]) 22 January 2025 (2025-01-22) | 14 | INV.<br>G02B21/00 |
| Y,P | * paragraphs [0037] - [0068], [0203], [0185], [0346] - [0351]; figures 1-7,12,17,18,20,25 * | 1-5,8-12 | G02B21/08<br>G02B21/12<br>G02B21/36 |
| X | & WO 2023/175862 A1 (EVIDENT CORP [JP]) 21 September 2023 (2023-09-21) | 14,15 | |
| Y | | 1-5,8-12 | |
| A | | 6,7,13 | |
| | ----- | | |
| A,P | EP 4 495 580 A1 (EVIDENT CORP [JP]) 22 January 2025 (2025-01-22) | 1 | |
| A | & WO 2023/175860 A1 (EVIDENT CORP [JP]) 21 September 2023 (2023-09-21) * the whole document * | 1 | |
| | ----- | | |
| A | US 2022/074854 A1 (SUZUKI YOSHIMASA [JP] ET AL) 10 March 2022 (2022-03-10) | 8 | |
| | ----- | | |
| Y | US 2022/244516 A1 (IKEDA SATOSHI [JP] ET AL) 4 August 2022 (2022-08-04) * paragraphs [0036], [0037]; claim 12; figures Fig. 1, 2 * * paragraphs [4942], [0047], [0037], [0067], [0068]; figures 2,3 * | 1-5,8-12 | TECHNICAL FIELDS SEARCHED (IPC)<br><br>G02B |
| | ----- | | |
| A | NGUYEN THANG L. ET AL: "Quantitative Phase Imaging: Recent Advances and Expanding Potential in Biomedicine", ACS NANO, 2 August 2022 (2022-08-02), pages 11516-11544, XP093346408, US ISSN: 1936-0851, DOI: 10.1021/acsnano.1c11507 Retrieved from the Internet: URL:https://pubs.acs.org/doi/pdf/10.1021/acsnano.1c11507 * the whole document * | 1-16 | |
| | ----- | | |

The present search report has been drawn up for all claims

| Place of search | Date of completion of the search | Examiner |
|---|---|---|
| Munich | 15 December 2025 | Hambach, Dirk |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 25 18 9798

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2025

| Patent document cited in search report | | | Publication date | Patent family member(s) | | | Publication date |
|---|---|---|---|---|---|---|---|
| EP 4495579 | A1 | | 22-01-2025 | EP | 4495579 | A1 | 22-01-2025 |
| | | | | JP | WO2023175860 | A1 | 21-09-2023 |
| | | | | US | 2024428554 | A1 | 26-12-2024 |
| | | | | WO | 2023175860 | A1 | 21-09-2023 |
| EP 4495580 | A1 | | 22-01-2025 | EP | 4495580 | A1 | 22-01-2025 |
| | | | | JP | WO2023175862 | A1 | 21-09-2023 |
| | | | | US | 2025003879 | A1 | 02-01-2025 |
| | | | | WO | 2023175862 | A1 | 21-09-2023 |
| US 2022074854 | A1 | | 10-03-2022 | JP | 7133718 | B2 | 08-09-2022 |
| | | | | JP | WO2021024420 | A1 | 16-12-2021 |
| | | | | US | 2022074854 | A1 | 10-03-2022 |
| | | | | WO | 2021024420 | A1 | 11-02-2021 |
| US 2022244516 | A1 | | 04-08-2022 | US | 2022244516 | A1 | 04-08-2022 |
| | | | | US | 2025314870 | A1 | 09-10-2025 |
| | | | | WO | 2021064807 | A1 | 08-04-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021024420 A

- WO 2023175860 A

**Non-patent literature cited in the description**

- **M D FEIT** ; **J A FLECK JR**. Light propagation in graded-index optical fibers. *Appl. Opt.*, 1978, vol. 17, 3990-3998